(19) Europäisches Patentamt
European Patent Office
Office européen des brevets

(11) Veröffentlichungsnummer : **0 076 782**
**B1**

(12) # EUROPÄISCHE PATENTSCHRIFT

(45) Veröffentlichungstag der Patentschrift : **05.03.86**

(51) Int. Cl.⁴ : **C 09 B 62/503**, D 06 P 3/66

(21) Anmeldenummer : **82810402.6**

(22) Anmeldetag : **27.09.82**

(54) **Reaktivfarbstoffe, deren Herstellung und Verwendung.**

(30) Priorität : **02.10.81 CH 6353/81**

(43) Veröffentlichungstag der Anmeldung : **13.04.83 Patentblatt 83/15**

(45) Bekanntmachung des Hinweises auf die Patenterteilung : **05.03.86 Patentblatt 86/10**

(84) Benannte Vertragsstaaten : **CH DE FR GB IT LI**

(56) Entgegenhaltungen :
**FR-A- 1 325 245**
**FR-A- 2 346 418**
**JP-B-65 017 113**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Scheibli, Peter, Dr.**
**Nussbaumweg 3**
**CH-4103 Bottmingen (CH)**
Erfinder : **Seiler, Herbert, Dr.**
**Leimgrubenweg 60**
**CH-4125 Riehen (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Reaktivfarbstoffe werden in grossem Umfang für das Färben und Bedrucken von textilen Fasermaterialien eingesetzt. Obwohl heute eine grosse Anzahl von brauchbaren Reaktivfarbstoffen mit unterschiedlichen Eigenschaften und für verschiedene Anwendungsbereiche zur Verfügung steht, kann der erreichte technische Stand, angesichts der hohen Anforderungen in bezug auf Eignung für bestimmte Färbeverfahren und Echtsheitsniveau der Färbungen, vielfach nicht voll befriedigen. Dies gilt auch für Reaktivfarbstoffe im Ausziehfärbeverfahren, besonders bei niedrigen Färbetemperaturen. Die Bereitstellung von verbesserten Reaktivfarbstoffen ist daher dringend erwünscht.

Der vorliegenden Erfindung lag die Aufgabe zugrunde, neue Reaktivfarbstoffe zu finden, die eine besondere Eignung für das Ausziehfärbeverfahren besitzen. Es hat sich gezeigt, dass die weiter unten definierten neuen Reaktivfarbstoffe den gestellten Anforderungen weitgehend entsprechen.

Gegenstand der Erfindung sind Reaktivfarbstoffe der Formel

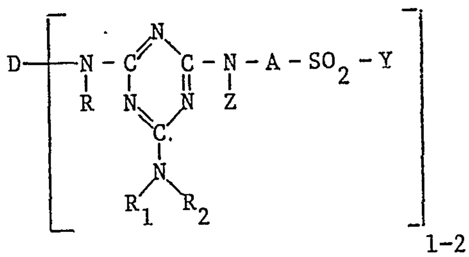

(1),

worin D der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl, Naphthochinon-, Pyrenchinon- oder Perylentetracarbimid-Reihe, R Wasserstoff oder gegebenenfalls substituiertes $C_{1-4}$-Alkyl, A gegebenenfalls substituiertes $C_{2-6}$-Alkylen oder Cyclohexylen, Y ein Rest $—CH = CH_2$ oder $—CH_2—CH_2—X$, X Sulfato, Thiosulfato, Acetato, Phosphato oder Chlor, Z Wasserstoff oder der Rest eines gegebenenfalls substituierten Kohlenwasserstoffs, $R_1$ Wasserstoff oder gegebenenfalls substituiertes Alkyl, und $R_2$ ein Rest der Formel

$$— A' — SO_2 — Y' \qquad (3),$$

worin A' und Y' die gleichen Bedeutungen haben wie A und Y in Formel (1), unabhängig von diesen.

Bevorzugte Untergruppen sind :

a) Reaktivfarbstoffe der Formel (1), worin D, R, A, Y, $R_1$ und $R_2$ die unter Formel (1) angegebenen Bedeutungen haben, und Z Wasserstoff oder ein Rest der Formel

$$— A — SO_2 — Y \qquad (2)$$

ist.

b) Reaktivfarbstoffe der Formel (1), worin D, R, A, Y, Z und $R_2$ die unter Formel (1) angegebenen Bedeutungen haben, und $R_1$ ein Rest der Formel

$$— A' — SO_2 — Y' \qquad (3)$$

ist, worin A' und Y' die unter Formel (1) angegebenen Bedeutungen haben, wobei A' und Y' unabhängig von A und Y ist.

c) Reaktivfarbstoffe gemäss b), worin A' = A und Y' = Y ist.

d) Reaktivfarbstoffe gemäss c), worin A ein Rest $—CH_2CH_2—$, Y ein Rest $—CH_2CH_2—Cl$, Z Wasserstoff, $R_1$ Wasserstoff und $R_2$ ein Rest $—CH_2CH_2—SO_2—CH_2CH_2—Cl$ ist.

e) Reaktivfarbstoffe gemäss c), worin A ein Rest $—CH_2CH_2—$, Y ein Rest $—CH_2CH_2—OSO_3H$, Z Wasserstoff, $R_1$ Wasserstoff und $R_2$ ein Rest

$$—CH_2CH_2—SO_2—CH_2CH_2—OSO_3H$$

ist.

f) Reaktivfarbstoffe der Formel (1), worin D die unter Formel (1) angegebene Bedeutung hat, R Wasserstoff oder $C_{1-4}$-Alkyl, A $C_{2-6}$-Alkylen, Y ein Rest $—CH = CH_2$ oder $—CH_2—CH_2—X$, worin X Cl oder $OSO_3H$ ist, Z Wasserstoff, $C_{1-4}$-Alkyl oder ein Rest der Formel (2), worin A und Y die oben angegebenen Bedeutungen haben, $R_1$ Wasserstoff, $C_{1-4}$-Alkyl, oder ein Rest der Formel (3), und $R_2$ ein Rest der Formel (3), worin A' und Y' die oben angegebenen Bedeutungen haben, ist.

g) Reaktivfarbstoffe der Formel (1), worin D der Rest eines Mono- oder Disazofarbstoffes ist.

h) Reaktivfarbstoffe der Formel (1), worin D der Rest eines Metallkomplexazo- oder Formazanfarbstoffes ist.

i) Reaktivfarbstoffe der Formel (1), worin D der Rest eines Anthrachinonfarbstoffes ist.

j) Reaktivfarbstoffe gemäss h), worin D der Rest eines Metallkomplexazofarbstoffes der Benzol- oder Naphthalinreihe ist.

k) Reaktivfarbstoffe gemäss j), worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist.

l) Reaktivfarbstoffe gemäss g) der Formel

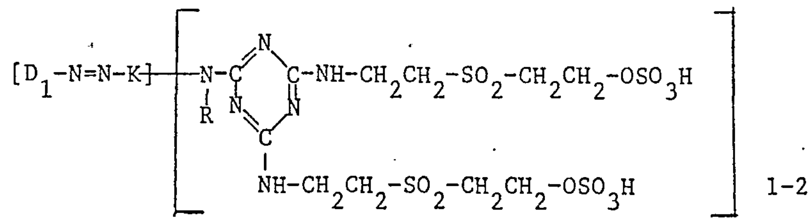 (4),

worin $D_1$ der Rest einer Diazokomponente der Benzol- oder Naphthalinreihe, K der Rest einer Kupplungskomponente der Benzol- oder Naphtalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist, oder je ein Reaktivrest sowohl an die Diazokomponente als auch an die Kupplungskomponente gebunden ist.

m) Reaktivfarbstoffe gemäss l), worin R Wasserstoff oder Methyl ist.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Aethyl, Propyl, Isopropyl und Butyl, Alkoxygruppen mit 1 bis 4 Kohlenstoffatomen, wie Methoxy, Aethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Diejenigen Reaktivfarbstoffe, worin D der Rest eines Azofarbstoffes ist, enthalten als Substituenten insbesondere Methyl, Aethyl, Methoxy, Benzoylamino, Amino, Acetylamino, Ureido, Sulfomethyl, Hydroxy, Carboxy, Halogen und Sulfo.

Als Alkylrest kommt für R in Formel (1) ein geradkettiger oder verzweigter Alkylrest in Betracht, der auch substituiert sein kann, z. B. durch Halogen, Hydroxy, Cyan oder Sulfo. Als Beispiele für R seien genannt: Methyl, Aethyl, Propyl, Isopropyl, Butyl, Isobutyl, sek.-Butyl, tert.-Butyl, β-Chloräthyl, β-Hydroxyäthyl, β-Hydroxybutyl, β-Cyanäthyl und Sulfomethyl.

Das aliphatische Brückenglied A kann ein langer oder kürzerer, geradkettiger oder verzweigter Alkylenrest sein; insbesondere kommt ein Alkylenrest mit 2 bis 6 Kohlenstoffatomen in Betracht, z. B. Aethylen, Propylen, Butylen, Hexylen oder Cyclohexylen.

Der Rest A kann weitere Substituenten enthalten, z. B. Halogenatome, wie Fluor, Chlor und Brom, Alkylgruppen mit 1 bis 4 Kohlenstoffatomen, wie Methyl, Aethyl und Propyl, Alkoxygruppen mit 1 bis 4 Kohlenstoffatomen, wie Methoxy, Aethoxy, Propyloxy und Isopropyloxy, Carboxy oder Sulfo. Vorzugsweise ist A $C_{2-6}$-Alkylen. Bevorzugt ist der Aethylenrest.

Der Rest eines gegebenenfalls substituierten Kohlenwasserstoffs Z ist z. B. ein Alkylrest, der geradkettig oder verzweigt ist, der vorzugsweise 1 bis 7 Kohlenstoffatome aufweist, und der weitersubstituiert sein kann, z. B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z. B. durch Methyl, Aethyl, Methoxy, Aethoxy, Chlor, Brom, Carboxy, Sulfo oder Sulfomethyl substituiert sein kann.

Als Beispiele für Z seien die Folgenden Substituenten genannt: Methyl, Aethyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Chlorpropyl, γ-Brompropyl, Sulfomethyl, β-Sulfoäthyl, Aminosulfonylmethyl, β-Sulfatoäthyl, Cyclohexyl, Phenyl, o-, m- oder p-Chlorphenyl, o-, m- oder p-Methylphenyl, p-Aethylphenyl, p-Methoxyphenyl, o-, m- oder p-Sulfophenyl, p-Carboxyphenyl und p-Sulfomethylphenyl. Bevorzugt sind unsubstituierte Alkylrest mit 1 bis 4 Kohlenstoffatomen.

Insbesondere ist Z Wasserstoff oder ein Rest der Formel

$$-A-SO_2-Y \qquad (2),$$

worin A und Y die unter Formel (1) angegebenen Bedeutungen haben.

Falls Z ein Rest Der Formel (2) ist, können die Reste der Formel (2), welche an das Stickstoffatom des externen Restes in Formel (1) gebunden sind, gleich oder verschieden sein. Vorzugsweise sind beide Reste der Formel (2) gleich.

Als Alkylrest kann $R_1$ geradkettig oder verzweigt, niedrigmolekular oder höhermolekular sein, bevorzugt sind Alkylreste mit 1 bis 6 Kohlenstoffatomen.

Die oben genannten Alkylreste $R_1$ können weitersubstituiert sein, z. B. durch Halogen, wie Fluor, Chlor und Brom, Cyan, Trifluormethyl, Sulfamoyl, Carbamoyl, $C_{1-4}$-Alkyl, $C_{1-4}$-Alkoxy, Acetylamino, Ureido, Hydroxy, Carboxy, Sulfomethyl und Sulfo.

Insbesondere ist $R_1$ Wasserstoff oder ein Rest der Formel

$$— A' — SO_2 — Y' \qquad (3),$$

und $R_2$ ein Rest der Formel (3), worin A' und Y' die gleichen Bedeutungen haben wie A und Y in Formel (1), wobei aber A' und Y' von A und Y unabhängig sind. Vorzugsweise ist aber A' = A und Y' = Y.

Bevorzugte Reste der Formeln (2) bzw. (3) sind die Reste

$$—CH_2CH_2—SO_2—CH_2CH_2Cl$$

und

$$—CH_2CH_2—SO_2—CH_2CH_2OSO_3H.$$

Die Farbstoffe der Formel (1) sind faserreaktiv, da sie am Triazinrest mindestens eine Abgangsgruppe enthalten.

Unter faserreaktiven Verbindungen sind solche zu verstehen, die mit den Hydroxygruppen der Cellulose oder mit den Aminogruppen von natürlichen oder Synthetischen Polyamiden unter Bildung kovalenter chemischer Bindungen zu reagieren vermögen.

Die Herstellung der Reaktivfarbstoffe der Formel (1) ist dadurch gekennzeichnet, dass man einen organischen Farbstoff der Formel

$$D - \underset{\substack{| \\ R}}{N} - H \qquad (5)$$

oder ein Farbstoffvorprodukt, mindestens ein Aequivalent 2,4,6-Trifluors-triazin, und mindestens ein Aequivalent je eines Amins der Formel

$$\underset{\substack{| \\ Z}}{HN} - A - SO_2 - Y \qquad (6)$$

und der Formel

$$\underset{\substack{| \\ R_1}}{HN} - R_2 \qquad (7)$$

kondensiert, wobei D, R, A, Y, Z, $R_1$ und $R_2$ in den oben genannten Formeln die unter Formel (1) angegebenen Bedeutungen haben, und dass man im Falle der Verwendung von Farbstoffvorprodukten, diese in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe, insbesondere der Amine der Formeln (6) und (7), ab, welche der möglichen Verfahrensvarianten die besten Resultate ergeben, oder unter welchen speziellen Bedingungen, z. B. bei welcher Kondensationstemperatur, die Reaktion am vorteilhaftesten auszuführen ist.

Eine wichtige Ausführungsform besteht darin, dass man 2,4,6-Trifluor-s-triazin zuerst mit einem organischen Farbstoff der Formel (5) und danach mit Aminen der Formeln (6) und (7) kondensiert, wobei die Kondensation mit dem Amin der Formel (6) vor oder nach der Kondensation mit dem Amin der Formel (7) erfolgen kann.

Vorzugsweise kondensiert man aber den Difluortriazinfarbstoff zuerst mit einem Amin der Formel (6) und zuletzt mit einem Amin der Formel (7).

Oder man setzt zunächst 2,4,6-Trifluor-s-triazin mit einem Amin der Formel (6) um, kondensiert die erhaltene Difluortriazinverbindung mit einem organischen Farbstoff der Formel (5), und kondensiert an letzter Stelle mit einem Amin der Formel (7). Dabei kann die Kondensation mit dem Amin der Formel (7) auch an erster Stelle und die Kondensation mit dem Amin der Formel (6) an letzter Stelle ausgeführt werden.

Insbesondere stellt man vorteilhaft zunächst einen Difluortriazinfarbstoff her, und kondensiert diesen

gleichzeitig oder nacheinander mit zwei Mol eines Amins oder zweier verschiedener Amine der Formel (6). In manchen Fällen wird die Kondensation mit dem organischen Farbstoff der Formel (5) auch an zweiter Stelle, d. h. zwischen den beiden Umsetzungen mit den Aminen der Formel (6), durchgeführt.

Reaktivfarbstoffe der Formel (1), worin beide Reste

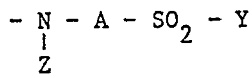

und $—NR_1R_2$ je einen Rest $—NH—CH_2CH_2—SO_2—CH_2CH_2Cl$ bilden, können dadurch hergestellt werden, dass man einen Difluortriazinfarbstoff mit einem Aequivalent eines Amins der Formel

$$H_2N—CH_2CH_2—SO_2—CH_2CH_2—Cl \quad (9)$$

kondensiert, und den erhaltenen Monofluortriazinfarbstoff mit einem weiteren Aequivalent des gleichen Amins umsetzt.

Eine andere vorteilhafte Methode besteht darin, zunächst einen Farbstoff herzustellen, der eine Vorstufe des Reaktivrestes enthält, und diese nachträglich in die Endstufe umzuwandeln, z. B. durch Veresterung oder eine Additionsreaktion.

Beispielsweise kann man einen Difluortriazinfarbstoff mit einem Amin der Formel

$$H_2N—CH_2CH_2—SO_2—CH_2CH_2—OH \quad (12)$$

kondensieren, und das Zwischenprodukt mit Schwefelsäure umsetzen, so dass die Hydroxygruppe in die Sulfatogruppe überführt wird ; oder man kann einen Difluortriazinfarbstoff mit einem Amin der Formel

$$H_2N—CH_2CH_2—SO_2—CH = CH_2 \quad 13)$$

kondensieren, und an das Zwischenprodukt Thioschwefelsäure anlagern, wobei ein Rest

$$—NH—CH_2CH_2—SO_2—CH_2CH_2—SSO_3H$$

entsteht.

Der oben beschriebene Weg der Herstellung über eine Zwischenstufe des Reaktivrestes geht in vielen Fällen einheitlich und vollständig.

Die bevorzugten Reaktivfarbstoffe der Formel (4) können glatt und mit guter Ausbeute hergestellt werden, indem man einen Farbstoff der Formel

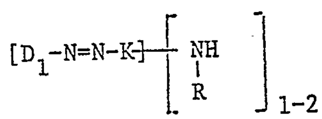 (11)

mit Cyanurfluorid kondensiert, den erhaltenen Difluortriazinfarbstoff mit zwei Aequivalenten eines Amins der Formel

$$H_2N—CH_2CH_2—SO_2—CH_2CH_2—OH \quad (12)$$

kondensiert, und den entstandenen Farbstoff der Formel

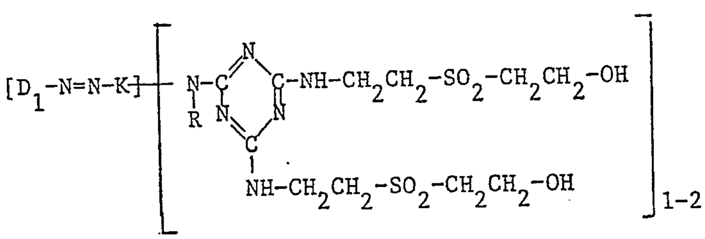 (14)

zuletzt mit Schwefelsäure umsetzt.

Der direkte Weg, die Kondensation des Difluortriazinfarbstoffes mit zwei Mol eines bereits sulfatierten Amins der Formel

$$H_2N—CH_2CH_2—SO_2—CH_2CH_2—OSO_3H \quad (10)$$

ist auch gangbar ; er ist aber weniger empfehlenswert, da ein Teil des gewünschten Endfarbstoffes der

Formel (4) durch Abspaltung von Schwefelsäure in den entsprechenden Vinylfarbstoff umgewandelt wird, und daher verloren geht.

Statt Cyanurfluorid zuerst mit einem Aminofarbstoff der Formel (11) zu kondensieren, das Kondensationsprodukt anschliessend mit zwei Aequivalenten eines Amins der Formel (10) oder (12) zu kondensieren und die erhaltene Verbindung gegebenenfalls zu sulfatieren, kann man den Aminofarbstoff der Formel (11) auch an zweiter Stelle kondensieren. Farbstoffe der Formel (14) erhält man auch durch vorgängige Kondensation des Cyanurfluorids mit zwei Aequivalenten eines Amins der Formel (12) und anschliessende Umsetzung mit einem Farbstoff der Formel (11).

Die oben gegebenen Erläuterungen zu den verschiedenen Verfahrensvarianten gelten auch für den Fall, dass man von Aminen der Formel (6) ausgeht, worin Z ein Rest der Formel (2) ist.

Diejenigen Reaktivfarbstoffe der Formel (1), worin D der Rest eines aus zwei oder mehr als zwei Komponenten zusammengesetzten organischen Farbstoffes ist, können auch nach einer Verfahrensvariante hergestellt werden, bei welcher man von Farbstoffvorprodukten ausgeht. Das geschieht in der Weise, dass man eine Komponente des Farbstoffs der Formel (5), die eine Gruppe —N(R)H enthält, und 2,4,6-Trifluor-s-triazin kondensiert, und in einer geeigneten Stufe des Verfahrens, gegebenenfalls auch vorher, mit einem Amin der Formel (6) und einem Amin der Formel (7) und mit der anderen (bzw. den übrigen) Komponente(n) des Farbstoffs der Formel (5) umsetzt, und gegebenenfalls sulfatiert oder eine andere Umwandlungsreaktion anschliesst.

Beispiele für derartige, aus zwei oder mehr als zwei Komponenten zusammengesetzte organische Farbstoffe sind: Monoazo-, Disazo-, Trisazo-, Tetrazo-, Metallkomplexazo-, Formazan- und Azomethinfarbstoffe.

Die oben beschriebene Verfahrensvariante ist vor allem wichtig für die Herstellung von Reaktivfarbstoffen der Formel (1), worin D der Rest eines sulfogruppenhaltigen Azofarbstoffes ist. In diesen kann derjenige Teil des Azofarbstoffrestes, an den der Reaktivrest unmittelbar gebunden ist, entweder der Rest der Diazokomponente oder der Rest der Kupplungskomponente sein. Dadurch ergeben sich zwei wichtige Ausführungsformen der oben beschriebenen Verfahrensvariante.

Die eine der beiden Varianten ist dadurch gekennzeichnet, dass man eine Diazokomponente des Farbstoffes, die eine Gruppe —N(R)H enthält, mit 2,4,6-Trifluor-s-triazin kondensiert, das erhaltene Kondensationsprodukt diazotiert und auf eine Kupplungskomponente kuppelt, und vor oder nach der Kondensation oder nach der Kupplung mit einem Amin der Formel (6) und einem Amin der Formel (7) kondensiert und gegebenenfalls sulfatiert oder eine andere Umwandlungsreaktion anschliesst.

Die zweite Variante ist dadurch gekennzeichnet, dass man eine Kupplungskomponente des Farbstoffs, die eine Gruppe —N(R)H enthält, mit 2,4,6-Trifluor-s-triazin kondensiert, und auf das so erhaltene Kondensationsprodukt eine diazotierte Diazokomponente kuppelt, und vor oder nach der Kondensation oder nach der Kupplung mit einem Amin der Formel (6) und einem Amin der Formel (7) kondensiert und gegebenenfalls sulfatiert oder dgl.

Nach diesen Verfahrensvarianten können Reaktivfarbstoffe der Formel (1), die zwei Reaktivreste enthalten, hergestellt werden, indem man eine Diazokomponente, die eine Gruppe —N(R)H enthält, mit 2,4,6-Trifluor-s-triazin kondensiert, dass man ferner eine Kupplungskomponente, die eine Gruppe —N(R)H enthält, mit 2,4,6-Trifluor-s-triazin kondensiert und dass man das Kondensationsprodukt der Diazokomponente diazotiert und auf das Kondensationsprodukt der Kupplungskomponente kuppelt, wobei das R im Kondensationsprodukt der Diazokomponente unabhängig ist von dem R im Kondensationsprodukt der Kupplungskomponente, und dass man vor oder nach der Kupplung beide Triazinreste mit zwei Aminen der Formel (6) und (7) kondensiert, und gegebenenfalls eine Umwandlungsreaktion anschliesst.

Farbstoffe der Formel (1), die zwei Reaktivreste enthalten, sind auch in der Weise herstellbar, dass man Farbstoffe der Formel (5) verwendet, die in D eine weitere Gruppe —N(R)H enthalten, diese mit einer entsprechenden Menge 2,4,6-Trifluor-s-triazin kondensiert, so dass zwei Fluortriazinreste in das Farbstoffmolekül eingeführt werden, dann mit einer entsprechenden Menge eines Amins der Formel (6) und eines Amins der Formel (7) kondensiert und gegebenenfalls sulfatiert, acyliert oder dgl.

Vorzugsweise verwendet man als Ausgangsstoffe organische Farbstoffe der Formel (5), worin D der Rest eines Mono- oder Disazofarbstoffes ist.

Vorzugsweise verwendet man ferner Amine der Formel (6), worin A Aethylen ist.

Eine bevorzugte Ausführungsform ist dadurch gekennzeichnet, dass man organische Farbstoffe der Formel

$$\left[ D_1-N=N-K \right] \left[ NHR \right]_{1-2} \qquad (15),$$

worin $D_1$ der Rest einer Diazokomponente der Benzol- oder Naphthalinreihe und K der Rest einer Kupplungskomponente der Benzol- oder Naphthalinreihe oder der heterocyclischen Reihe ist, als Ausgangsstoffe verwendet.

Nach einer weiteren bevorzugten Herstellungsweise vewendet man Farbstoffe der Formel (5), worin D der Rest eines Metallkomplexazo- oder Formazanfarbstoffes ist.

Die als Ausgangsstoffe verwendeten Farbstoffe der Formel (5) können im Rest D wie weiter vorn beschrieben substituiert sein. Vorzugsweise geht man von organischen Farbstoffen der Formel (5) aus, worin D der Rest eines Azofarbstoffes ist, der als Substituent Methyl, Aethyl, Methoxy, Benzoylamino, Amino Acetylamino, Ureido, Sulfomethyl, Hydroxy, Carboxy, Halogen und Sulfo enthalten kann.

Eine bevorzugte Verfahrensvariante ist dadurch gekennzeichnet, dass man einen organischen Farbstoff der Formel (5) mit 2,4,6-Trifluor-s-triazin kondensiert, das Kondensationsprodukt mit zwei Aequivalenten eines Amins der Formel

$$\underset{\substack{|\\ Z}}{HN}-A-SO_2-CH_2CH_2-OH \quad (8)$$

kondensiert, und das tertiäre Kondensationsprodukt mit Schwefelsäure umsetzt.

Eine weitere bevorzugte Verfahrensvariante ist dadurch gekennzeichnet, dass man 2,4,6-Trifluor-s-triazin mit einem Amin der Formel (8) kondensiert, das primäre Kondensationsprodukt mit einem organischen Farbstoff der Formel (5) kondensiert, anschliessend nochmals mit einem Amin der Formel (8) kondensiert und das tertiäre Kondensationsprodukt mit Schwefelsäure behandelt.

Eine weitere bevorzugte Verfahrensweise ist dadurch gekennzeichnet, dass man 2,4,6-Trifluor-s-triazin mit zwei Aequivalenten eines Amins der Formel (8) kondensiert, das sekundäre Kondensationsprodukt mit einem organischen Farbstoff der Formel (5) kondensiert und das tertiäre Kondensationsprodukt mit Schwefelsäure behandelt.

Eine weitere bevorzugte Verfahrensweise ist dadurch gekennzeichnet, dass man einen organischen Farbstoff der Formel (5) mit 2,4,6-Trifluor-s-triazin kondensiert, und das Kondensationsprodukt mit zwei Aequivalenten eines Amins der Formel (6), worin Y $-CH_2CH_2-Cl$ oder $-CH_2CH_2-OSO_3H$ ist, kondensiert.

Als Amin der Formel (6) verwendet man vorzugsweise die Verbindung der Formel

$$H_2N-CH_2CH_2-SO_2-CH_2CH_2-Cl \quad (9)$$

oder die Verbindung der Formel

$$H_2N-CH_2CH_2-SO_2-CH_2CH_2-OSO_3H \quad (10)$$

Die Kondensation des 2,4,6-Trifluor-s-triazins mit den organischen Farbstoffen der Formel (5) bzw. den eine Gruppe —N(R)H enthaltenden diazotierbaren und/oder kupplungsfähigen Komponenten erfolgen vorzugsweise in wässriger Lösung oder Suspensionen, bei niedrigen Temperaturen, vorzugsweise zwischen 0° und 5 °C und bei schwach saurem, neutralem bis schwach alkalischem pH-Wert. Vorteilhaft wird der bei der Kondensation freiwerdende Fluorwasserstoff laufend durch Zugabe wässriger Alkalihydroxide, -carbonate oder -bicarbonate neutralisiert.

Für die weitere Umsetzung der so erhaltenen Fluortriazinfarbstoffe bzw. für die Umsetzung des 2,4,6-Trifluor-s-triazins mit den Aminen der Formel (6), setzt man die Amine zweckmässigerweise in Form eines Salzes, bevorzugt in Form des Hydrochlorides, ein. Die Umsetzung wird bei Temperaturen etwa zwischen 0 und 40 °C, bevorzugt zwischen 5 und 25 °C, unter Zusatz säurebindender Mittel, bevorzugt Natriumcarbonat, in einem pH-Bereich von 2 bis 6,5, bevorzugt 5 bis 6,5, durchgeführt.

Die Kondensation des Fluortriazins mit einem Amin der Formel (7) kann vor oder nach der Kondensation des Fluortriazins mit einem Farbstoff der Formel (5) und/oder einem Amin der Formel (6) geschehen. Die Kondensation des Fluortriazins mit einem Amin der Formel (7) erfolgt vorzugsweise in wässriger Lösung oder Suspension, bei niedriger Temperatur und bei schwach saurem, neutralem bis schwach alkalischem pH-Wert, oder gegebenenfalls, besonders wenn nur noch 1 oder 2 austauschbare Fluoratome am Triazinring übrig sind, bei erhöhter Temperatur, z. B. zwischen 50 und 100 °C. Auch hier wird der bei der Kondensation freiwerdende Fluorwasserstoff vorteilhafterweise durch laufende Zugabe von wässrigen Alkalihydroxiden, -carbonaten oder -bicarbonaten neutralisiert.

Die Sulfatierung der Hydroxygruppe in einem Amin der Formel (8), bzw. in einem den Rest eines solchen Amins enthaltenden Kondensationsprodukt mit Cyanufluorid, erfolgt vorzugsweise durch Umsetzung mit konzentrierter Schwefelsäure bei 0 °C bis mässig erhöhter Temperatur.

Diese Sulfatierung kann auch durch Reaktion der Hydroxyverbindung mit 2 Aequivalent Chlorsulfonsäure pro Hydroxygruppe in einem polaren organischen Lösungsmittel wie beispielsweise N-Methylpyrrolidon bei 10 bis 80 °C erfolgen.

Vorzugsweise erfolgt die Sulfatierung durch Eintragen der betreffenden Verbindung in Schwefelsäuremonohydrat bei Temperaturen zwischen 5 und 15 °C.

Die Einführung eines anderen unter alkalischen Bedingungen abspaltbaren anorganischen oder organischen Restes für X in eine Verbindung der Formel (1) anstelle eines Chloratoms oder der Sulfatogruppe, beispielsweise einer Thiosulfato- oder Phosphatogruppe, erfolgt in an sich bekannter Weise.

Im folgenden sollen mögliche Ausgangsstoffe, die zur Herstellung der Reaktivfarbstoffe der Formel (1) verwendet werden können, einzeln genannt werden.

Als Farbstoffe der Formel (5) kommen besonders Farbstoffe der folgenden Strukturtypen in Betracht :

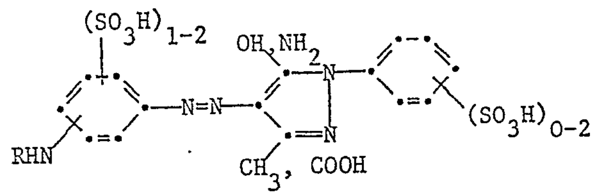

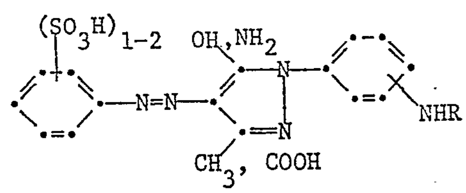

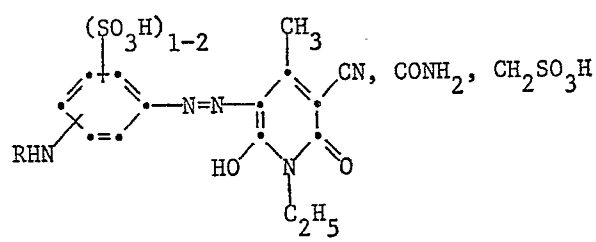

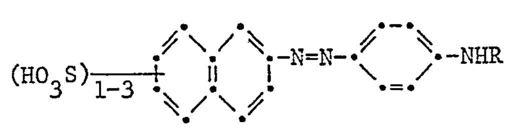

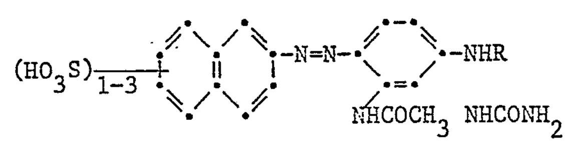

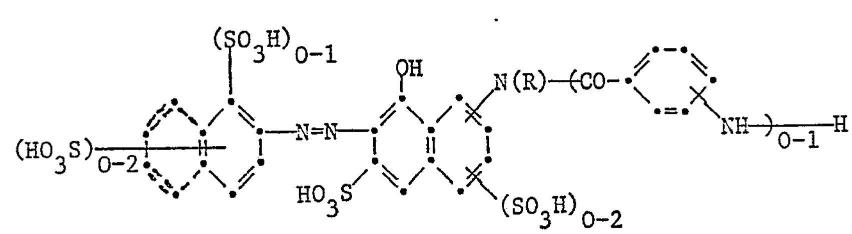

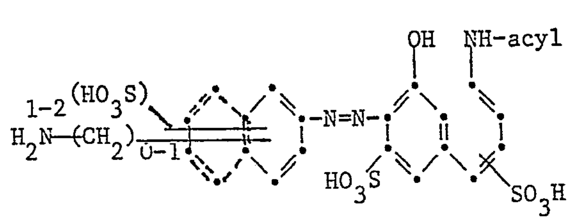

worin acyl z. B. Acetyl oder gegebenenfalls substituiertes Benzoyl ist.

Metallkomplexe von Farbstoffen der Formeln :

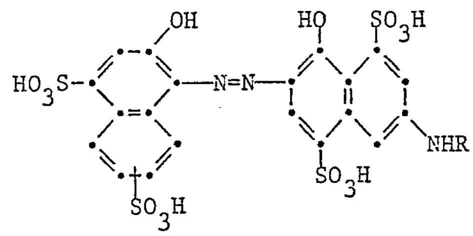

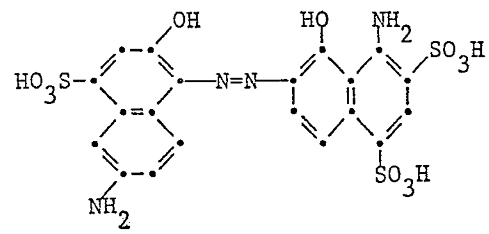

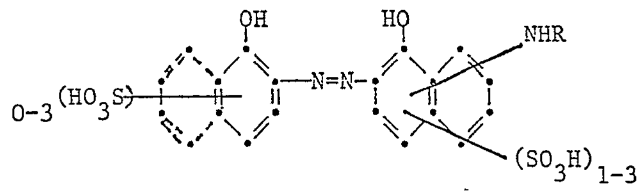

Als Metallatom sind Cu (1 : 1-Komplex) oder Cr und Co (1 : 2-Komplex) bevorzugt. Cr- und Co-Komplexe können die Azoverbindung der oben angegebenen Formel einmal oder zweimal enthalten, d. h. sie können symmetrisch oder mit beliebigen anderen Ligandengruppen unsymmetrisch aufgebaut sein.

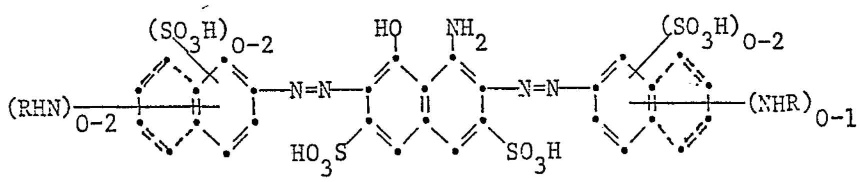

Die durch Strichelungen angedeuteten kondensierten Ringe stehen für alternativ mögliche Naphthalinsysteme.

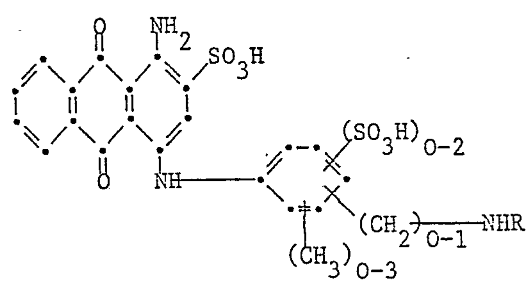

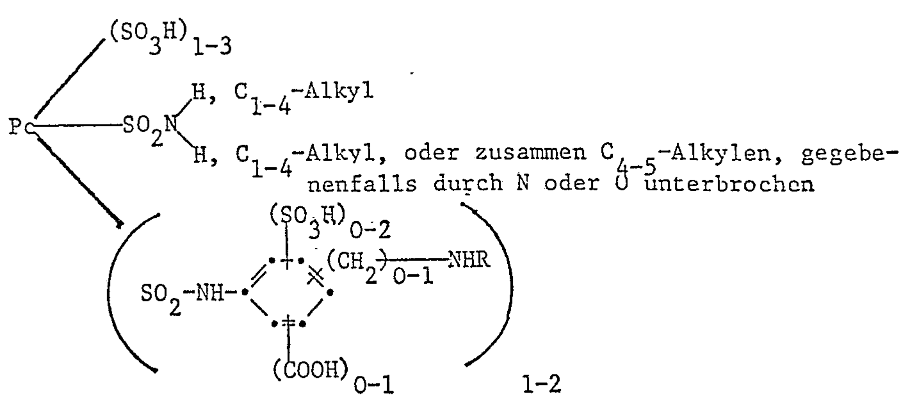

In dieser Formel steht Pc für den Cu- oder Ni-Phthalocyaninrest. Die Gesamtzahl der Substituenten am Pc-Gerüst ist dabei 4.

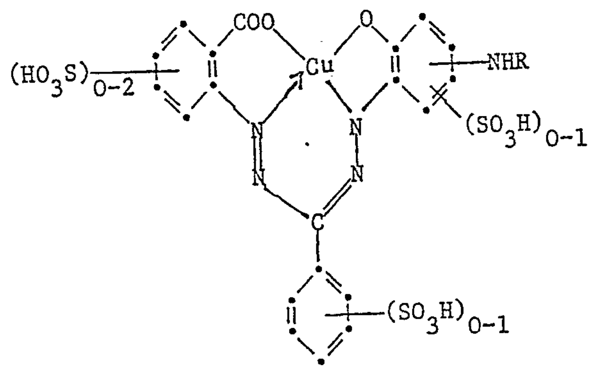

Die Farbstoffe der oben angegebenen Formeln können in den Alkyl- oder Arylresten weitersubstituiert sein, insbesondere durch die bei der Erläuterung von D in Formel (1) genannten Substituenten.

Besonders wichtige Azofarbstoffe der Formel (11) sind die folgenden :

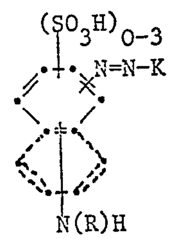

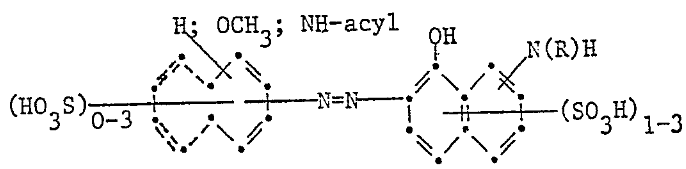

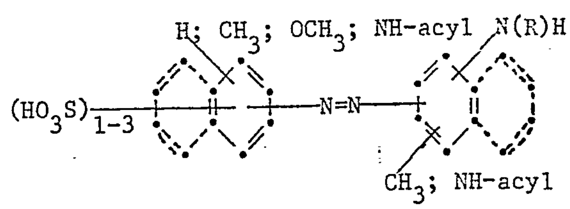

und

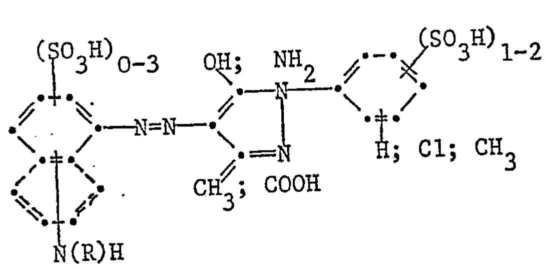

worin K der Rest einer Kupplungskomponente der Benzol-, Naphthalin- oder der heterocyclischen Reihe, acyl ein niedrigmolekularer, höchstens 3 Kohlenstoffatome enthaltender aliphatischer Acylrest oder ein höchstens 8 Kohlenstoffatome enthaltender aromatischer Rest ist, und R die bei der Erläuterung der Formel (1) angegebenen Bedeutungen hat, sowie die Metallkomplex-Azofarbstoffe der Formeln

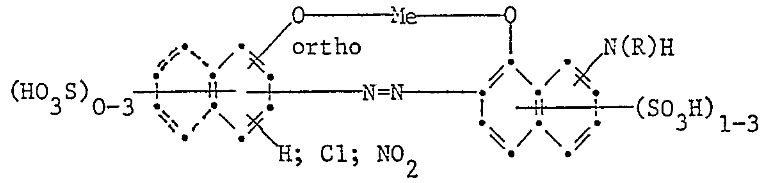

und

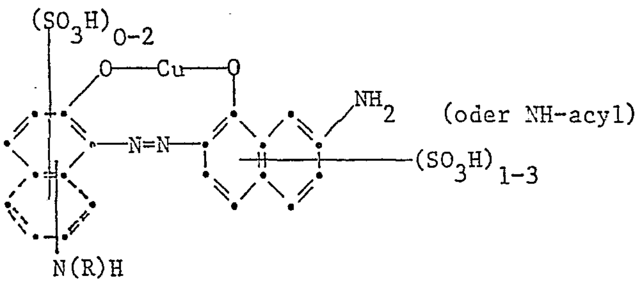

(oder NH-acyl)

worin R und acyl die oben angegebenen Bedeutungen haben und Me für Cu, Cr oder Co steht.

2,4,6-Trifluor-1,3,5-triazin (Cyanurfluorid) sowie primäre oder sekundäre Kondensationsprodukte des 2,4,6-Trifluor-1,3,5-triazins mit den weiter unten genannten Aminen der Formel (6) bzw. (7).

Amine der Formel (6)

β-(β-Hydroxyäthyl-sulfonyl)-äthyl-amin (2-Tauryläthanol),
γ-(β-Hydroxyäthyl-sulfonyl)-propyl-amin,
α-(β-Hydroxyäthyl-sulfonyl)-isopropyl-amin,
δ-(β-Hydroxyäthyl-sulfonyl)-butyl-amin,
β-(β-Hydroxyäthyl-sulfonyl)-isobutyl-amin,
ε-(β-Hydroxyäthyl-sulfonyl)-pentyl-amin,
β-(β-Hydroxyäthyl-sulfonyl)-hexyl-amin,
N-Methyl-N-β-(β-hydroxyäthyl-sulfonyl)-äthyl-amin,
N-Aethyl-N-β-(β-hydroxyäthyl-sulfonyl)-äthyl-amin,
N-Propyl-N-β(β-hydroxyäthyl-sulfonyl)-äthyl-amin,
N-Butyl-N-β-(β-hydroxyäthyl-sulfonyl)-äthyl-amin,
N-Pentyl-N-β-(β-hydroxyäthyl-sulfonyl)-äthyl-amin,
N-Hexyl-N-β-(β-hydroxyäthyl-sulfonyl)-äthyl-amin,
N-Nonyl-N-β-(β-hydroxyäthyl-sulfonyl)-äthyl-amin,
N-Dodecyl-N-β-(β-hydroxyäthyl-sulfonyl)-äthyl-amin,
N-Hexadecyl-N-β-(β-hydroxyäthyl-sulfonyl)-äthyl-amin,
N-Oktadecyl-N-β-(β-hydroxyäthyl-sulfonyl)-äthyl-amin,
N-Carboxymethyl-N-β-(β-hydroxyäthyl-sulfonyl)-äthyl-amin,
N-Sulfatomethyl-N-β-(β-hydroxyäthyl-sulfonyl)-äthyl-amin,
N-β-Carboxyäthyl-N-γ-(β-hydroxyäthyl-sulfonyl)-propyl-amin,
N-β-Sulfatoäthyl-N-γ-(β-hydroxyäthyl-sulfonyl)-propyl-amin,
N-β-Sulfatoäthyl-N-δ-(β-hydroxyäthyl-sulfonyl)-butyl-amin,
N-β-Aethoxyäthyl-N-δ-(β-hydroxyäthyl-sulfonyl)-butyl-amin,
N-γ-Chlorpropyl-N-β-(β-hydroxyäthyl-sulfonyl)-äthyl-amin,
N-Phenyl-N-β-(β-hydroxyäthyl-sulfonyl)-äthyl-amin,
N-p-Chlorphenyl-N-β-(β-hydroxyäthyl-sulfonyl)-äthyl-amin,
N-o-Methylphenyl-N-β-(β-hydroxyäthyl-sulfonyl)-äthyl-amin,
N-p-Methoxyphenyl-N-β-(β-hydroxyäthyl-sulfonyl)-äthyl-amin,
N-m-Sulfophenyl-N-β-(β-hydroxyäthyl-sulfonyl)-äthyl-amin,
N-p-Sulfophenyl-N-β-(β-hydroxyäthyl-sulfonyl)-äthyl-amin,
Bis-[β-(β-hydroxyäthyl-sulfonyl)-äthyl]-amin,
Bis-[γ-(β-hydroxyäthyl-sulfonyl)-propyl]-amin,
Bis-[δ-(β-hydroxyäthyl-sulfonyl)-butyl]-amin,
sowie die entsprechenden sulfatierten Verbindungen.
β-(β-Chloräthyl-sulfonyl)-äthyl-amin,
β-(B-Bromäthyl-sulfonyl)-äthyl-amin,
β-Vinylsulfonyl-äthyl-amin,
γ-(β-Chloräthyl-sulfonyl)-propyl-amin,
α-(β-Chloräthyl-sulfonyl)-isopropyl-amin,
δ-(β-Chloräthyl-sulfonyl)-butyl-amin,

β-(β-Chloräthyl-sulfonyl)-isobutyl-amin,
ε-(β-Chloräthyl-sulfonyl)-pentyl-amin,
β-(β-Chloräthyl-sulfonyl)-hexyl-amin,
N-Methyl-N-β-(β-chloräthyl-sulfonyl)-äthyl-amin,
N-Aethyl-N-β-(β-chloräthyl-sulfonyl)-äthyl-amin,
N-Propyl-N-β-(β-chloräthyl-sulfonyl)-äthyl-amin,
N-Butyl-N-β-(β-chloräthyl-sulfonyl)-äthyl-amin,
N-Pentyl-N-β-(β-chloräthyl-sulfonyl)-äthyl-amin,
N-Hexyl-N-β-(β-chloräthyl-sulfonyl)-äthyl-amin,
N-Nonyl-N-β-(β-chloräthyl-sulfonyl)-äthyl-amin,
N-Dodecyl-N-β-(β-chloräthyl-sulfonyl)-äthyl-amin,
N-Hexadecyl-N-β-(β-chloräthyl-sulfonyl)-äthyl-amin,
N-Octadecyl-N-β-(β-chloräthyl-sulfonyl)-äthyl-amin,
N-Carboxymethyl-N-β-(β-bromäthyl-sulfonyl)-äthyl-amin,
N-Sulfatomethyl-N-β-(β-chloräthyl-sulfonyl)-äthyl-amin,
N-β-Carboxyäthyl-N-γ-(β-chloräthyl-sulfonyl)-propyl-amin,
N-β-Sulfatoäthyl-N-γ-(β-chloräthyl-sulfonyl)-propyl-amin,
N-β-Sulfatoäthyl-N-δ-(β-chloräthyl-sulfonyl)-butyl-amin,
N-β-Aethoxyäthyl-N-δ-(β-chloräthyl-sulfonyl)-butyl-amin,
N-γ-Chlorpropyl-N-β-(β-chloräthyl-sulfonyl)-äthyl-amin,
N-Phenyl-N-β-(β-chloräthyl-sulfonyl)-äthyl-amin,
N-p-Chlorphenyl-N-β-(β-chloräthyl-sulfonyl)-äthyl-amin,
N-o-Methylphenyl-N-β-(β-chloräthyl-sulfonyl)-äthyl-amin,
N-p-Methoxyphenyl-N-β-(β-chloräthyl-sulfonyl)-äthyl-amin,
N-m-Sulfophenyl-N-β-(β-chloräthyl-sulfonyl)-äthyl-amin,
N-p-Sulfophenyl-N-β-(β-chloräthyl-sulfonyl)-äthyl-amin,
Bis-[β-(β-chloräthyl-sulfonyl)-äthyl]-amin,
Bis-[β-(β-bromäthyl-sulfonyl)-äthyl]-amin,
Bis-[γ-(β-chloräthyl-sulfonyl)-propyl]-amin,
Bis-[δ-(β-chloräthyl-sulfonyl)-butyl]-amin,
Bis-(β-vinylsulfonyl-äthyl)amin.

Bevorzugt sind Amine von niederem Molekulargewicht wie das β-(β-Hydroxyäthyl-sulfonyl)-äthylamin sowie die entsprechende sulfatierte Verbindung oder das β-(β-Chloräthyl-sulfonyl)-äthylamin und deren N-Methylderivate, und ferner Bis-[β-(β-hydroxyäthyl-sulfonyl)-äthyl]-amin sowie die entsprechende sulfatierte Verbindung und das Bis-[β-(β-chloräthyl-sulfonyl)-äthyl]-amin.

Amine der Formel (7)

Diese entsprechen den Aminen der Formel (6), gemäß Definition von $R_1$ und $R_2$ in Formel (1).

Geht man zur Herstellung der bevorzugten Reaktivfarbstoffe der Formel (1), worin D der Rest eines Azofarbstoffes ist, nicht von den fertigen Aminofarbstoffen, z. B. solchen die weiter vorn beschrieben sind, sondern von Farbstoffvorprodukten, d. h. den Diazo- und Kupplungskomponenten aus, kommen beispielsweise die folgenden in Betracht :

Diazokomponenten :

Aminobenzol, 1-Amino-2-, -3- oder -4-methylbenzol, 1-Amino-2-, -3- oder -4-methoxybenzol, 1-Amino-2-, -3- oder -4-chlorbenzol, 1-Amino-2,5-dichlorbenzol, 1-Amino-2,5-dimethylbenzol, 1-Amino-3-methyl-6-methoybenzol, 1-Amino-2-methoxy-4-nitrobenzol, 1-Aminobiphenyl, 1-Aminobenzol-2-, -3- oder -4-carbonsäure, 2-Aminodiphenyläther, 1-Aminobenzol-2-, -3- oder -4-sulfonsäureamid, -N-methylamid, -N-äthylamid, -N,N-dimethylamid oder -N,N-diäthylamid, Dehydrothio-p-toluidin-sulfonsäure, 1-Amino-3-trifluormethyl-6-sulfonsäure, 1-Amino-3- oder -4-nitrobenzol, 1-Amino-3- oder -4-acetylaminobenzol, 1-Aminobenzol-2-, -3- oder -4-sulfonsäure, 1-Aminobenzol-2,4- und -2,5-disulfonsäure, 1-Amino-4-methylbenzol-2-sulfonsäure, 1-Amino-3-methylbenzol-6-sulfonsäure, 1-Amino-6-methylbenzol-3- oder -4-sulfonsäure, 1-Amino-2-carboxybenzol-4-sulfonsäure, 1-Amino-4-carboxybenzol-2-sulfonsäure, 1-Amino-4- oder -5-chlorbenzol-2-sulfonsäure, 1-Amino-6-chlorbenzol-3- oder -4-sulfonsäure, 1-Amino-3,4-dichlorbenzol-6-sulfonsäure, 1-Amino-2,5-dichlorbenzol-6-sulfonsäure, 1-Amino-2,5-dichlorbenzol-4-sulfonsäure, 1-Amino-4-methyl-5-chlorbenzol-2-sulfonsäure, 1-Amino-5-methyl-4-chlorbenzol-2-sulfonsäure, 1-Amino-4- oder -5-methoxybenzol-2-sulfonsäure, 1-Amino-6-methoxybenzol-3- oder -4-sulfonsäure, 1-Amino-6-äthoxybenzol-3- oder -4-sulfonsäure, 1-Amino-2,4-dimethoxybenzol-6-sulfonsäure, 1-Amino-2,5-dimethoxybenzol-4-sulfonsäure, 1-Amino-3-acetylaminobenzol-6-sulfonsäure, 1-Amino-4-acetylaminobenzol-2-sulfonsäure, 1-Amino-3-acetylamino-4-methylbenzol-6-sulfonsäure, 2-Amino-1-methylbenzol-3,5-disulfonsäure, 1-Amino-4-methoxybenzol-2,5-disulfonsäure, 1,3-Diaminobenzol-4-sulfonsäure, 1,4-Diaminobenzol-3-sulfonsäure, 1,4-Diaminobenzol-2,5-disulfonsäure, 1-Amino-3- oder -4-nitrobenzol-6-sulfonsäure, 1-Aminonaphthalin, 2-Aminonaphthalin, 1-Aminonaphthalin-2-, -4-, -5-, -6-, -7- oder -8-sulfonsäure, 2-Aminonaphthalin-1-, -3-, -4-, -5-, -6-, -7- oder 8-sulfonsäure, 2-Amino-naphthalin-3,6- oder -5,7-disulfonsäure, 1-Aminonaphthalin-3,6- oder -5,7-disulfonsäure, 2-Aminonaphthalin-1,5-, -1,7-, -3,6-, -5,7-, -4,8- oder -6,8-disulfonsäure, 1-Aminonaphthalin-2,5,7-trisulfonsäure, 2-Aminonaphthalin-1,5,7-, -

3,6,8- oder -4,6,8-trisulfonsäure, 1-Hydroxy-2-aminobenzol-4-sulfonsäure, 1-Hydroxy-2-aminobenzol-5-sulfonsäure, 1-Hydroxy-2-aminobenzol-4,6-disulfonsäure, 1-Hydroxy-2-amino-4-acetylaminobenzol-6-sulfonsäure, 1-Hydroxy-2-amino-6-acetylaminobenzol-4-sulfonsäure, 1-Hydroxy-2-amino-4-chlorbenzol-5-sulfonsäure, 1-Hydroxy-2-amino-4-methylsulfonylbenzol, 1-Amino-2-hydroxy-6-nitronaphthalin-6-sulfonsäure, 2-Amino-1-hydroxy-naphthalin-4,8-disulfonsäure, 4-Aminoazobenzol-3,4'-disulfonsäure, 3-Methoxy-4-amino-6-methylazobenzol-2',4'-disulfonsäure, 3-Methoxy-4-amino-6-methylazobenzol-2',5'-disulfonsäure.

Kupplungskomponenten :

Phenol, 1-Hydroxy-3- oder -4-methylbenzol, 1-Hydroxybenzol-4-sulfonsäure, 1-Hydroxynaphthalin, 2-Hydroxynaphthalin, 2-Hydroxynaphthalin-6- oder -7-sulfonsäure, 2-Hydroxynaphthalin-3,6- oder -6,8-disulfonsäure, 1-Hydroxynaphthalin-4-sulfonsäure, 1-Hydroxynaphthalin-4,6- oder 4,7-disulfonsäure, 1-Amino-3-methylbenzol, 1-Amino-2-methoxy-5-methylbenzol, 1-Amino-2,5-dimethylbenzol, 3-Aminophenylharnstoff, 1-Amino-3-acetylaminobenzol, 1-Amino-3-hydroxyacetylaminobenzol, 1,3-Diaminobenzol-4-sulfonsäure, 1-Aminonaphthalin-6- oder -8-sulfonsäure, 1-Amino-2-methoxynaphthalin-6-sulfonsäure, 2-Aminonaphthalin-5,7-disulfonsäure, 1-Amino-8-hydroxynaphthalin-6-sulfonsäure, 1-Amino-8-hydroxynaphthalin-2,4-disulfonsäure, 2-Hydroxy-3-aminonaphthalin-5,7-disulfonsäure, 1-Amino-8-hydroxynaphthalin-2,4,6-trisulfonsäure, 1-Hydroxy-8-acetylaminonaphthalin-3-sulfonsäure, 1-Benzoylamino-8-hydroxynaphthalin-3,6- oder -4,6-disulfonsäure, 2-Benzoylamino-5-hydroxynaphthalin-7-sulfonsäure, 2-Amino-5-hydroxynaphthalin-7-sulfonsäure, 2-Methyl- bzw. 2-Aethylamino-5-hydroxynaphthalin-7-sulfonsäure, 2-(N-Acetyl-N-methylamino)-5-hydroxynaphthalin-7-sulfonsäure, 2-Acetylamino-5-hydroxynaphthalin-7-sulfonsäure, 2-Amino-5-hydroxynaphthalin-1,7-disulfonsäure, 2-Amino-8-hydroxynaphthalin-6-sulfonsäure, 2-Methyl- bzw. -Aethylamino-8-hydroxynaphthalin-6-sulfonsäure, 2-(N-Acetyl-N-methylamino)-8-hydroxynaphthalin-6-sulfonsäure, 2-Acetylamino-8-hydroxynaphthalin-6-sulfonsäure, 2-Amino-8-hydroxynaphthalin-3,6-disulfonsäure, 2-Acetylamino-8-hydroxynaphthalin-3,6-disulfonsäure, 1-Amino-5-hydroxynaphthalin-7-sulfonsäure, 1-Amino-8-hydroxynaphthalin-3,6- bzw. -4,6-disulfonsäure, 1-Acetylamino-8-hydroxynaphthalin-3,6- bzw. -4,6-disulfonsäure, 1-(4'-Aminobenzoylamino)-8-hydroxynaphthalin-3,6- bzw. -4,6-disulfonsäure, 1-(4'-Nitrobenzoylamino)-8-hydroxynaphthalin-3,6- bzw. -4,6-disulfonsäure, 1-(3'-Amino-benzoylamino)-8-hydroxynaphthalin-3,6- bzw. -4,6-disulfonsäure, 1-(3'-Nitrobenzoylamino)-8-hydroxynaphthalin-3,6- bzw. -4,6-disulfonsäure, 2-(4'-Amino-3'-sulfophenylamino)-5-hydroxynaphthalin-7-sulfonsäure, 3-Methylpyrazolon-(5), 1-Phenyl-3-methyl-5-pyrazolon, 1-(4'-Sulfophenyl)-3-methyl-5-pyrazolon, 1-(4'-Sulfophenyl)-pyrazolon-(5)-3-carbonsäure, 1-(3'-Aminophenyl)-3-methyl-5-pyrazolon, 1-(2',5'-Disulfophenyl)-3-methyl-5-pyrazolon, 1-(2'-Methyl-4'-sulfophenyl)-5-pyrazolon-3-carbonsäure, 1-(4',8'-Disulfonaphthyl-[2'])-3-methyl-5-pyrazolon, 1-(5',7'-Disulfonaphthyl-[2'])-3-methyl-5-pyrazolon, 1-(2',5'-Dichlor-4'-sulfophenyl)-3-methyl-5-pyrazolon, 3-Aminocarbonyl-4-methyl-6-hydroxypyridon-(2), 1-Aethyl-3-cyan- oder -3-chlor-4-methyl-6-hydroxypyridon-(2), 1-Aethyl-3-3-sulfomethyl-4-methyl-6-hydroxypyridon-(2), 2,4,6-Triamino-3-cyanpyridin, 2-(3'-Sulfophenylamino)-4,6-diamino-3-cyanpyridin, 2-(2'-Hydroxyäthylamino)-3-cyan-4-methyl-6-aminopyridin, 2,6-Bis-(2'-hydroxyäthylamino)-3-cyan-4-methylpyridin, 1-Aethyl-3-carbamoyl-4-methyl-6-hydroxypyridon-(2), 1-Aethyl-3-sulfomethyl-4-methyl-5-carbamoyl-6-hydroxypyridon-(2), N-Acetoacetylaminobenzol, 1-(N-Acetoacetylamino)-2-methoxybenzol-5-sulfonsäure, 4-Hydroxychinolon-(2), 1-Amino-8-hydroxy-2-(phenylazo)-naphthalin-3,6-disulfonsäure, 1-Amino-8-hydroxy-2-(4'-sulfophenylazo)-naphthalin-3,6-disulfonsäure, 1-Amino-8-hydroxy-2-(2',5'-disulfophenylazo)-naphthalin-3,6-disulfonsäure.

Geht man von Farbstoffvorprodukten aus, muss mindestens eine der beiden Komponenten, die Diazokomponente oder die Kupplungskomponente eine acylierbare Aminogruppe aufweisen. Die Diazotierung der eine diazotierbare Aminogruppe enthaltenden Zwischenprodukte erfolgt in der Regel durch Einwirkung salpetriger Säure in wässrig-mineralsaurer Lösung bei tiefer Temperatur, die Kupplung bei schwach sauren, neutralen bis schwach alkalischen pH-Werten.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Nass- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonders zum Färben von Baumwolle nach den Ausziehfärbeverfahren, wobei die Differenz zwischen Ausziehgrad und Fixiergrad bemerkenswert klein, d. h. der Seifverlust sehr gering ist.

Die Reaktivfarbstoffe der Formel (1) eignen sich auch zum Druck, insbesondere auf Baumwolle,

ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen.

Die Herstellung der Monoazo- oder Disazozwischenverbindungen ist in den nachfolgenden Ausführungsbeispielen nicht in allen Fällen beschrieben, sie ergibt sich jedoch ohne weiteres aus dem oben Gesagten.

In den nachfolgenden Beispielen bedeuten die Teile Gewichtsteile, und die Temperaturen sind in Celsiusgraden angegeben.

Beispiel 1 : 16,4 Teile des Farbstoffes der Formel

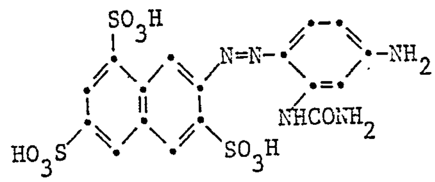

werden in 500 ml Wasser neutral gelöst und die Lösung auf 0 bis 5 °C abgekühlt. Bei dieser Temperatur werden 4,3 Teile 2,4,6-Trifluor-1,3,5-triazin innert 15 Minuten zugetropft, wobei der pH der Reaktionsmischung durch gleichzeitige Zugabe von 2n Natriumhydroxydlösung bei 6,0 bis 6,5 gehalten wird. Nach Zusatz von 5,5 Teilen 2-Tauryläthanol wird die Temperatur innert 2 bis 3 Stunden auf 20 bis 25 °C erhöht und dabei der pH der Reaktionsmischung durch ständige Zugabe von 2n Natriumhydroxydlösung bei 7,0 bis 7,5 gehalten. Nach Erhöhen der Temperatur auf 40 °C werden weitere 13,2 Teile 2-Tauryläthanol portionsweise zugesetzt und dabei der pH der Reaktionsmischung bei 8,5 bis 9,0 gehalten. Nach vollständiger Reaktion wird der gebildete Farbstoff der Formel

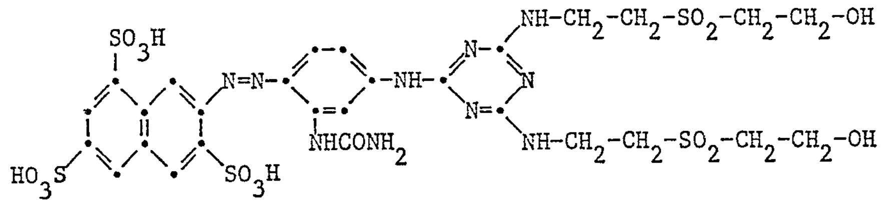

bei pH 7 durch Einstreuen von Kaliumchlorid ausgesalzen, filtriert, gewaschen und im Vakuum getrocknet. Er stellt ein oranges Pulver dar und ergibt keine Reaktivfärbung auf Baumwolle.

Elementaranalyse einer 68,5 prozentigen Charge :

ber. C 24,85 % H 2,53 % N 10,35 % S 11,85 %

gef. C 24,85 % H 2,75 % N 10,45 % S 11,8 %

Zur Sulfatierung der beiden Hydroxygruppen werden 10 Teile des erhaltenen Farbstoffes fein gemahlen und in 20 Teile auf 5 bis 10 °C gekühltes Schwefelsäuremonohydrat eingetragen. Nach vollständiger Homogenisierung wird auf 80 Teile Eis gegossen und der pH der Reaktionsmischung sorgfältig mit verdünnter Kaliumhydroxydlösung auf 6,0 gestellt. Der gebildete Reaktivfarbstoff wird durch Einstreuen von Kaliumchlorid ausgesalzen, filtriert, gewaschen und im Vakuum getrocknet. Er stellt ein oranges Pulver dar und färbt Baumwolle insbesondere als Kaltfärber in rotstichigen Gelbtönen.

Elementaranalyse einer 74,0 prozentigen Charge :

ber. C 22,9 % H 2,3 % N 9,5 % S 15,3 %

gef. C 22,9 % H 3,0 % N 9,75 % S 14,7 %.

Beispiel 2 : Analog Beispiel 1 wird der Farbstoff der Formel

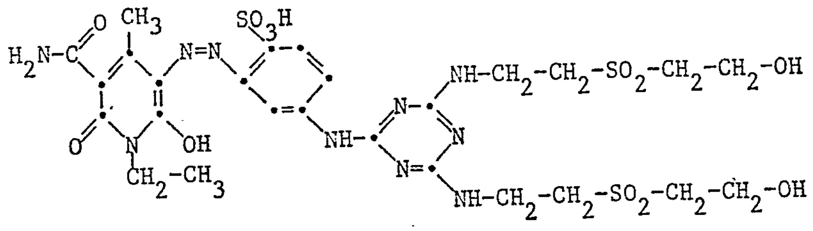

erhalten, der keine Reaktivfärbung auf Baumwolle ergibt.

Elementaranalyse einer 76,6 prozentigen Charge :
ber. C 30,8 % H 3,6 % N 13,8 % S 9,5 %
gef. C 30,8 % H 4,15 % N 13,65 % S 9,3 %:

Die beiden Hydroxygruppen des erhaltenen Farbstoffes werden analog Beispiel 1 sulfatiert. Nach Klären der neutralisierten Reaktionslösung wird der gebildete Reaktivfarbstoff durch Einstreuen von Natriumchlorid bei pH 3,2 ausgesalzen, filtriert, gewaschen und im Vakuum getrocknet. Er stellt ein gelbes Pulver dar und färbt Baumwolle insbesondere als Kaltfärber in grünstichigen Gelbtönen.

Elementaranalyse einer 76,2 prozentigen Charge :
ber. C 25,4 % H 2,9 % N 11,4 % S 13,0 %
gef. C 25,4 % H 3,3 % N 11,4 % S 12,4 %.

Weitere Reaktivfarbstoffe, die Baumwolle insbesondere als Kaltfärber in den in Tabelle 1, Spalte 3, angegebenen Farbtönen färben, werden erhalten, wenn man die in Spalte 2 angegebenen aminogruppenhaltigen Chromophore gemäss den Angaben in Beispiel 1 zuerst mit 2,4,6-Trifluor-1,3,5-triazin, dann stufenweise mit 2 Aequivalent 2-Tauryläthanol umsetzt und die zwei Hydroxygruppen des so erhaltenen Farbstoffes sulfatiert.

Tabelle 1

| No. | Chromophor | Farbton auf Baumwolle |
|---|---|---|
| 1 | 2-Aminonaphthalin-1,5-disulfonsäure → 1-Amino-3-acetylaminobenzol | rotstichig gelb |
| 2 | 2-Aminonaphthalin-1,5-disulfonsäure → 3-Aminophenylharnstoff | do. |
| 3 | 2-Aminonaphthalin-1,5-disulfonsäure → 1-Amino-3-hydroxyacetylaminobenzol | do. |
| 4 | 2-Aminonaphthalin-5,7-disulfonsäure → 1-Amino-3-acetylaminobenzol | do. |
| 5 | 2-Aminonaphthalin-5,7-disulfonsäure → 3-Aminophenylharnstoff | do. |
| 6 | 2-Aminonaphthalin-4,8-disulfonsäure → 1-Amino-3-methylbenzol | gelb |
| 7 | 2-Aminonaphthalin-4,8-disulfonsäure → 1-Amino 3-acetylaminobenzol | do. |
| 8 | 2-Aminonaphthalin-3,6-disulfonsäure → 1-Amino-3-acetylaminobenzol | rotstichig gelb |
| 9 | 2-Aminonaphthalin-3,6-disulfonsäure → 3-Aminophenylharnstoff | do. |
| 10 | 2-Aminonaphthalin-6,8-disulfonsäure → 1-Amino-3-acetylaminobenzol | do. |
| 11 | 2-Aminonaphthalin-6,8-disulfonsäure → 1-Amino-2-methoxynaphthalin-6-sulfonsäure | do. |
| 12 | 2-Aminonaphthalin-3,6,8-trisulfonsäure → 1-Amino-3-acetylaminobenzol | do. |
| 13 | 2-Aminonaphthalin-3,6,8-trisulfonsäure → 1-Amino-3-methylbenzol | do. |
| 14 | 2-Aminonaphthalin-4,6,8-trisulfonsäure → 1-Amino-3-methylbenzol | do. |
| 15 | 2-Aminonaphthalin-4,6,8-trisulfonsäure → 1-Amino-3-acetylaminobenzol | do. |
| 16 | 1-Aminobenzol-2,5-disulfonsäure → 1-Aminonaphthalin-6-sulfonsäure | do. |
| 17 | 1-Aminobenzol-2,5-disulfonsäure → 1-Aminonaphthalin-6-sulfonsäure → 1-Aminonaphthalin-8-sulfonsäure | rotstichig braun |

Tabelle 1 (Fortsetzung)

| No. | Chromophor | Farbton auf Baumwolle |
|---|---|---|
| 18 | 1-Aminonaphthalin-2,5,7-trisulfonsäure → 1-Aminonaphthalin-6-sulfonsäure —— 1-Aminonaphthalin-8-sulfonsäure | violettstichig braun |
| 19 | 1-Aminonaphthalin-2,5,7-trisulfonsäure → 1-Amino-2,5-dimethylbenzol → 1-Aminonaphthalin-6-sulfonsäure | rotstichig braun |
| 20 | 1-Amino-4-(2',5'-disulfophenylazo)-naphthalin-6-sulfonsäure → 1-Amino-3-methylbenzol | braun |
| 21 | 1-Amino-4-(2',5'-disulfophenylazo)-naphthalin-6-sulfonsäure → 1-Aminonaphthalin-6-sulfonsäure | do. |
| 22 | 1-Amino-4-(4'-sulfophenylazo)-benzol-2-sulfonsäure → 1-Aminonaphthalin-6-sulfonsäure | do |
| 23 | 1-Amino-4-(4',6',8'-trisulfonaphthyl-2'-azo)-naphthalin-6-sulfonsäure → 1-Amino-3-methylbenzol | do. |
| 24 | 1-Amino-4-(2',5'-disulfophenylazo)-naphthalin-6-sulfonsäure → 1-Amino-2,5-dimethylbenzol | do. |
| 25 | 4-Aminoazobenzol-3,4'-disulfonsäure → 1-Aminonaphthalin-6-sulfonsäure | gelbbraun |
| 26 | 1,4-Diaminobenzol-2,5-disulfonsäure → 1-Aethyl-3-sulfomethyl-4-methyl-6-hydroxy-pyridon-(2)-5-carbonsäureamid | gelb |
| 27 | 1-Amino-3-acetylaminobenzol-6-sulfonsäure → 1-Aethyl-3-sulfomethyl-4-methyl-6-hydroxy-pyridon-(2)-5-carbonsäureamid (verseift) | do. |
| 28 | 1-Amino-3-acetylaminobenzol-6-sulfonsäure → 1-(2',5'-Dichlor-4'-sulfophenyl)-3-methyl-pyrazolon-(5) (verseift) | do. |
| 29 | 1-Amino-3-acetylaminobenzol-6-sulfonsäure → 1-(2',5'-Disulfophenyl)-3-methyl-pyrazolon-(5) (verseift) | do. |
| 30 | 1-Amino-3-acetylaminobenzol-6-sulfonsäure → 1-(4'-Sulfophenyl)-3-carboxy-pyrazolon-(5) (verseift) | do. |
| 31 | 1-Amino-3-acetylaminobenzol-6-sulfonsäure → 1-(2'-Methyl-4'-sulfophenyl)-3-carboxy-pyrazolon-(5) (verseift) | do. |

Tabelle 1 (Fortsetzung)

| No. | Chromophor | Farbton auf Baumwolle |
|---|---|---|
| 32 | 1-Amino-3-acetylaminobenzol-6-sulfonsäure ⟶ 1-(4',8'-Disulfonaphthyl-[2'])-3-methyl-pyrazolon-(5) (verseift) | gelb |
| 33 | 1-Aminobenzol-2,5-disulfonsäure ⟶ 1-(3'-Amino-phenyl)-3-methyl-pyrazolon-(5) | do. |
| 34 | 1-Aminobenzol-2,5-disulfonsäure ⟶ 2-Acetylamino-5-hydroxynaphthalin-7-sulfonsäure (verseift) | orange |
| 35 | 1-Aminobenzol-2-sulfonsäure ⟶ 2-Amino-5-hydroxynaphthalin-1,7-disulfonsäure | do. |
| 36 | 2-Aminonaphthalin-1,5-disulfonsäure ⟶ 2-Acetylamino-5-hydroxynaphthalin-7-sulfonsäure (verseift) | do. |
| 37 | 2-Aminonaphthalin-3,6,8-trisulfonsäure ⟶ 2-Acetylamino-5-hydroxynaphthalin-7-sulfonsäure (verseift) | do. |
| 38 | 2-Aminonaphthalin-1,5,7-trisulfonsäure ⟶ 1-Acetylamino-5-hydroxynaphthalin-7-sulfonsäure (verseift) | do. |
| 39 | 1-Amino-4-methoxybenzol-2,5-disulfonsäure ⟶ 2-Amino-5-hydroxynaphthalin-7-sulfonsäure | scharlach |
| 40 | 1-Amino-4-methoxybenzol-2-sulfonsäure ⟶ 2-Amino-5-hydroxynaphthalin-7-sulfonsäure | do. |
| 41 | 1-Amino-4-methoxybenzol-2-sulfonsäure ⟶ 2-Methylamino-5-hydroxynaphthalin-7-sulfonsäure | do. |
| 42 | 1-Aminobenzol-2-sulfonsäure ⟶ 1-(4'-Nitro-benzoylamino)-8-hydroxynaphthalin-3,6-disulfonsäure (reduziert) | blaustichig rot |
| 43 | 1-Aminobenzol-2,5-disulfonsäure ⟶ 1-(3'-Nitro-benzoylamino)-8-hydroxynaphthalin-4,6-disulfonsäure (reduziert) | do. |
| 44 | 2-Amino-5-aminomethyl-naphthalin-1-sulfonsäure ⟶ 1-Benzoylamino-8-hydroxynaphthalin-3,6-disulfonsäure | do. |
| 45 | 2-Aminonaphthalin-1,5-disulfonsäure ⟶ 1-(4' Nitrobenzoylamino)-8-hydroxynaphthalin-3,6-disulfonsäure (reduziert). | do. |

Tabelle 1 (Fortsetzung)

| No. | Chromophor | Farbton auf Baumwolle |
|---|---|---|
| 46 | 1-Amino-3-acetylaminobenzol-6-sulfonsäure → 1-Benzoylamino-8-hydroxynaphthalin-3,6-disulfonsäure (verseift) | blaustichig rot |
| 47 | 1-Amino-3-acetylaminobenzol-6-sulfonsäure → 1-Acetylamino-8-hydroxynaphthalin-3,6-disulfonsäure (verseift) | do. |
| 48 | 1-Amino-3-acetylaminobenzol-6-sulfonsäure → 1-Benzoylamino-8-hydroxynaphthalin-4,6-disulfonsäure (verseift) | do. |
| 49 | 1-Amino-3-acetylaminobenzol-6-sulfonsäure → 1-Acetylamino-8-hydroxynaphthalin-4,6-disulfonsäure (verseift) | gelbstichig rot |
| 50 | 1-Amino-4-acetylaminobenzol-2-sulfonsäure → saure 2-Amino-8-hydroxynaphthalin-3,6-disulfonsäure (verseift) | blaustichig rot |
| 51 | 1-Amino-4-acetylaminobenzol-2-sulfonsäure → saure 2-Amino-8-hydroxynaphthalin-6-sulfonsäure (verseift) | do. |
| 52 | 1-Amino-4-methoxybenzol-2-sulfonsäure → 1-Amino-8-hydroxynaphthalin-3,6-disulfonsäure | rotstichig violett |
| 53 | 1-Amino-4-methoxybenzol-2-sulfonsäure → 1-Amino-8-hydroxynaphthalin-6-sulfonsäure | do. |
| 54 | 1-Hydroxy-2-aminobenzol-4-sulfonsäure → 2-Amino-5-hydroxynaphthalin-7-sulfonsäure (Cu-Komplex) | rubin |
| 55 | 1-Hydroxy-2-aminobenzol-4,6-disulfonsäure → 2-Amino-5-hydroxynaphthalin-7-sulfonsäure (Cu-Komplex) | do. |
| 56 | 1-Hydroxy-2-aminobenzol-4,6-disulfonsäure → 2-Aethylamino-5-hydroxynaphthalin-7-sulfonsäure (Cu-Komplex) | do. |
| 57 | 1-Hydroxy-2-aminobenzol-4,6-disulfonsäure → 2-Amino-8-hydroxynaphthalin-3,6-disulfonsäure (Cu-Komplex) | do. |
| 58 | 1-Hydroxy-2-aminobenzol-4,6-disulfonsäure → 1-Amino-8-hydroxynaphthalin-3,6-disulfonsäure (Cu-Komplex) | violett |

Tabelle 1 (Fortsetzung)

| No. | Chromophor | Farbton auf Baumwolle |
|---|---|---|
| 59 | 1-Hydroxy-2-aminobenzol-4,6-disulfonsäure → 1-Amino-8-hydroxynaphthalin-4,6-disulfonsäure (Cu-Komplex) | violett |
| 60 | 1-Hydroxy-2-amino-4-acetylaminobenzol-6-sulfonsäure → 1-Amino-8-hydroxynaphthalin-2,4-disulfonsäure (Cu-Komplex) (verseift) | blau |
| 61 | 1-Hydroxy-2-amino-6-acetylaminobenzol-4-sulfonsäure → 1-Amino-8-hydroxynaphthalin-2,4-disulfonsäure (verseift) (Cu-Komplex) | do. |
| 62 | 1-Amino-2-hydroxy-6-nitronaphthalin-4-sulfonsäure → 1-Amino-8-hydroxynaphthalin-2,4-disulfonsäure (reduziert) (Cu-Komplex) | do. |
| 63 | 1-Amino-2-hydroxy-6-nitronaphthalin-4-sulfonsäure → 1-Amino-8-hydroxynaphthalin-2,4,6-trisulfonsäure (reduziert) (Cu-Komplex) | do. |
| 64 | 2-Amino-1-hydroxynaphthalin-4,8-disulfonsäure → 1-Amino-8-hydroxynaphthalin-3,6-disulfonsäure (Cu-Komplex) | do. |
| 65 | 2-Aminonaphthalin-4,8-disulfonsäure → 2-Hydroxy-3-aminonaphthalin-5,7-disulfonsäure (oxydierend gekupfert) | do. |
| 66 | 3-Methoxy-4-amino-6-methylazobenzol-2',5'-disulfonsäure → 2-Methylamino-5-hydroxynaphthalin-7-sulfonsäure (entmethylierend gekupfert) | marineblau |
| 67 | 3-Methoxy-4-amino-6-methylazobenzol-2'.4'-disulfonsäure → 2-Amino-5-hydroxynaphthalin-1,7-disulfonsäure (entmethylierend gekupfert) | do. |
| 68 | 1-Amino-3-acetylaminobenzol-6-sulfonsäure → 1-Amino-8-hydroxy-2-(4'-sulfophenylazo)-naphthalin-3,6-disulfonsäure (verseift) | blau |
| 69 | 1-Amino-4-(3'-amino-2',4',6'-trimethylphenylamino)-anthrachinon-2,5'-disulfonsäure | do. |
| 70 | 1-Amino-4-(2',6'-dimethyl-3'-aminomethyl-phenylamino)-anthrachinon-2,5'-disulfonsäure | rotstichig blau |
| 71 | 1-Amino-4-(4'-methyl-2'-aminomethyl-phenylamino)-anthrachinon-2,6'-disulfonsäure | do. |

Tabelle 1 (Fortsetzung)

| No. | Chromophor | Farbton auf Baumwolle |
|---|---|---|
| 72 | 1-Amino-4-(5'-amino-phenylamino)-anthrachinon-2,2',4'-trisulfonsäure | blau |
| 73 | 1-Amino-4-(4'-amino-phenylamino)-anthrachinon-2,3'-disulfonsäure | do. |
| 74 | 1-Amino-4-(4'-amino-phenylamino)-anthrachinon-2,2'-disulfonsäure | do- |
| 75 | 1-Amino-4-(3'-amino-phenylamino)-anthrachinon-2,4'-disulfonsäure | do. |
| 76 | 1-Amino-4-(2'-methyl-3'-amino-phenylamino)-anthrachinon-2,5'-disulfonsäure | do. |
| 77 | 1-Amino-4-(2'-methyl-3'-amino-phenylamino)-anthrachinon-2,6,5'-trisulfonsäure | grünstichig blau |
| 78 | 1-Amino-4-(5'-aminomethyl-phenylamino)-anthrachinon-2,2',4'-trisulfonsäure | blau |
| 79 | 1-Amino-4-(4'-amino-cyclohexylamino)-anthrachinon-2,6-disulfonsäure | do. |
| 80 | 1-Amino-4-(4'-amino-cyclohexylamino)-anthrachinon-2-sulfonsäure | do. |
| 81 | 1-Amino-4-(3'-amino-4'-methyl-cyclohexylamino)-anthrachinon-2-sulfonsäure | do. |
| 82 | 1-Amino-4-(3'-amino-2'-methyl-cyclohexylamino)-anthrachinon-2-sulfonsäure | do. |
| 83 | 1-Amino-4-(4'-amino-3'-methyl-cyclohexylamino)-anthrachinon-2-sulfonsäure | do. |
| 84 | 1-Amino-4-(4'-aminomethyl-cyclohexylamino)-anthrachinon-2-sulfonsäure | do. |
| 85 | 1-Amino-4-(3'-aminomethyl-cyclohexylamino)-anthrachinon-2-sulfonsäure | do. |
| 86 | 1-Amino-4-(2'-amino-äthylamino)-anthrachinon-2-sulfonsäure | do. |
| 87 | 1-Amino-4-(2'-methylamino-äthylamino)-anthrachinon-2-sulfonsäure | do. |
| 88 | 1-Amino-4-(3'-aminopropylamino)-anthrachinon-2-sulfonsäure | do. |

Tabelle 1 (Fortsetzung)

| No. | Chromophor | Farbton auf Baumwolle |
|---|---|---|
| 89 | 1-Amino-4-(3'-methylaminopropylamino)-anthrachinon-2-sulfonsäure | blau |
| 90 | 1-Amino-4-(4'-aminobutylamino)-anthrachinon-2-sulfonsäure | do. |
| 91 | N-(2-Carboxy-4-sulfophenyl)-N'-(2'-hydroxy-3'-amino-5'-sulfophenyl)-ms-phenylformazan (Cu-Komplex) | do. |
| 92 | N-(2-Carboxy-5-sulfophenyl)-N'-(2'-hydroxy-3'-amino-5'-sulfophenyl)-ms-phenylformazan (Cu-Komplex) | do. |
| 93 | N-(2-Carboxy-4-sulfophenyl)-N'-(2'-hydroxy-3'-amino-5'-sulfophenyl)-ms-(2"-chlor-5"-sulfophenyl)-formazan (Cu-Komplex) | do. |
| 94 | N-(2-Carboxy-4-aminophenyl)-N'-(2'-hydroxy-3',5'-disulfophenyl)-ms-(3"-sulfophenyl)-formazan (Cu-Komplex) | do. |
| 95 | N-(2-Carboxy-5-sulfophenyl)-N'-(2'-hydroxy-3',5'-disulfophenyl)-ms-(3"-aminophenyl)-formazan (Cu-Komplex) | grünstichig blau |
| 96 | N-(2-Hydroxy-3-amino-5-sulfophenyl)-N'-(2'-hydroxy-4'-sulfophenyl)-ms-(2"-sulfophenyl)-formazan (Cu-Komplex) | marineblau |
| 97 | N-(2-Hydroxy-5-sulfophenyl)-N'-(2'-hydroxy-3',5'-disulfophenyl)-ms-(4"-aminophenyl)-formazan (Cu-Komplex) | blau |
| 98 | N-(2-Hydroxy-5-amino-3-sulfophenyl)-N'-(2',5'-disulfophenyl)-ms-phenylformazan (Cu-Komplex) | do. |
| 99 | N-(2-Hydroxy-4,6-disulfophenyl)-N'-(2',4'-disulfophenyl)-ms-(3"-aminophenyl)-formazan (Cu-Komplex) | do. |
| 100 | N-(2-Hydroxy-4-sulfophenyl)-N'-(4'-amino-2'-sulfophenyl)-ms-(4"-chlor-3"-sulfophenyl)-formazan (Cu-Komplex) | do. |

Tabelle 1 (Fortsetzung)

| No. | Chromophor | Farbton auf Baumwolle |
|---|---|---|
| 101 | 0,5 Aequivalent 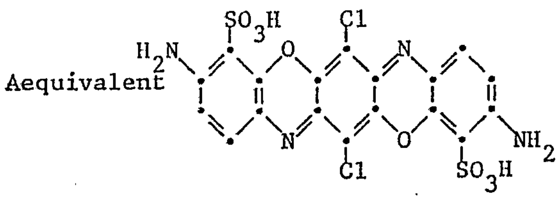 | rotstichig blau |
| 102 | 0,5 Aequivalent 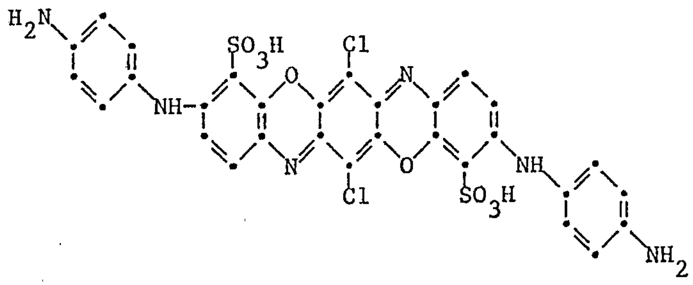 | blau |
| 103 | 0,5 Aequivalent 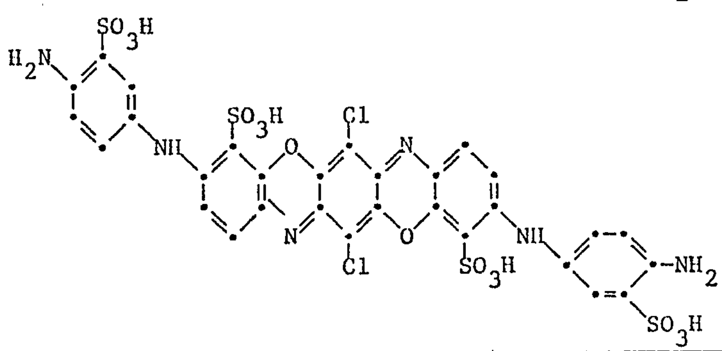 | do. |

Tabelle 1 (Fortsetzung)

| No. | Chromophor | Farbton auf Baumwolle |
|---|---|---|
| 104 | 0,5 Aequivalent 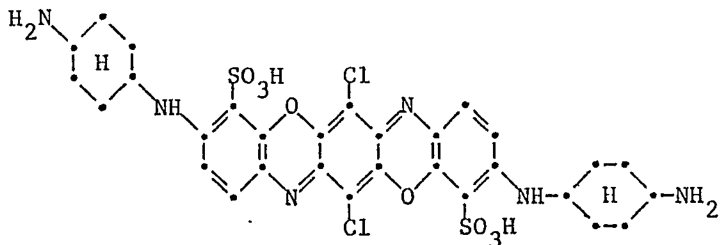 | blau |
| 105 | 0,5 Aequivalent 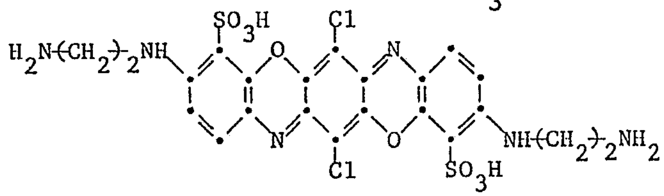 | do. |
| 106 | 0,5 Aequivalent 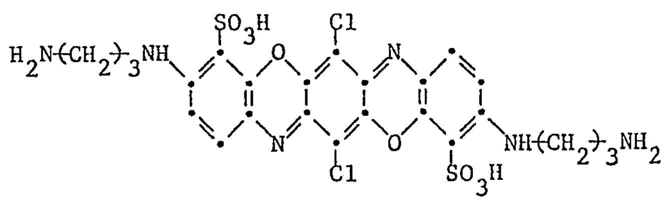 | do. |

Tabelle 1 (Fortsetzung)

| No. | Chromophor | Farbton auf Baumwolle |
|---|---|---|
| 107 | 0,5 Aequivalent 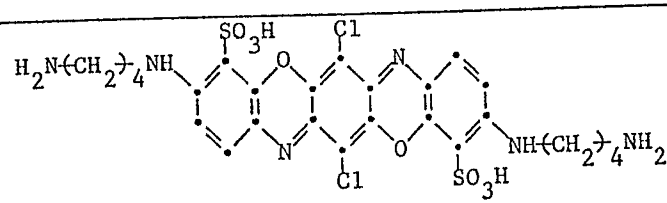 | blau |
| 108 | CuPc-(3) 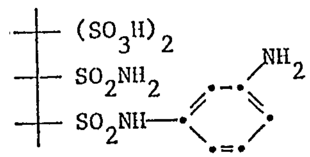 | türkisblau |
| 109 | NiPc-(3) 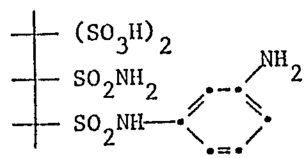 | do. |
| 110 | CuPc-(3) 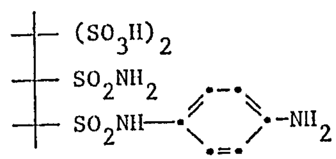 | do. |

Tabelle 1 (Fortsetzung)

| No. | Chromophor | | Farbton auf Baumwolle |
|---|---|---|---|
| 111 | CuPc(3) | 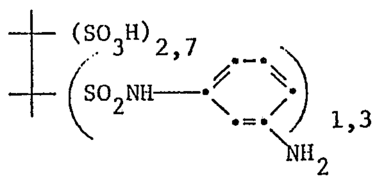 | türkisblau |
| 112 | CuPc-(3) | 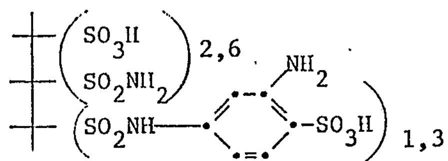 | do. |
| 113 | CuPc-(4) | 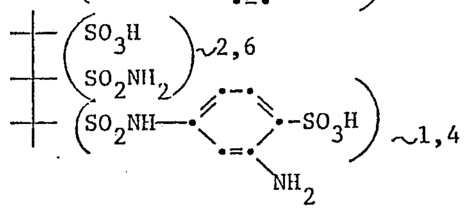 | do. |
| 114 | CuPc-(4) | 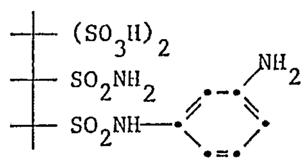 | do. |
| 115 | NiPc-(4) | 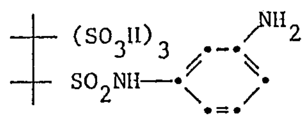 | do. |

Tabelle 1 (Fortsetzung)

| No. | Chromophor | Farbton auf Baumwolle |
|---|---|---|
| 116 | CuPc-(3) $-(SO_3H)_{2,5}$ $-(SO_2NHCH_2CH_2NH_2)_{1,5}$ | türkisblau |
| 117 | CuPc-(3) $-(SO_3H)_2$ $-SO_2NH_2$ $-SO_2NHCH_2CH_2NH_2$ | do. |
| 118 | CuPc-(3) 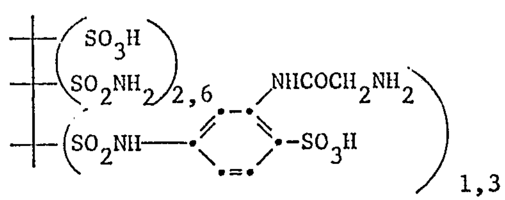 | do. |
| 119 | CuPc-(3) 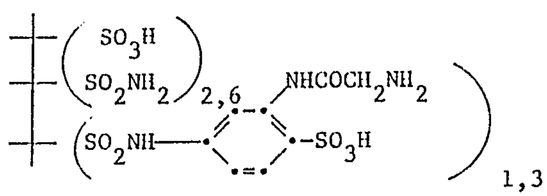 | do. |

Beispiel 3

16,0 Teile 1-Amino-8-hydroxynaphthalin-3,6-disulfonsäure werden in 400 ml Wasser neutral gelöst und die Lösung auf 0 bis 5 °C abgekühlt. Bei dieser Temperatur und pH 4,5 werden 7,1 Teile 2,4,6-Trifluor-1,3,5-triazin innert 15 Minuten zugetropft, wobei der pH der Reaktionslösung durch gleichzeitige Zugabe von 2n Natriumhydroxidlösung schwach kongosauer gehalten wird. Nach Zusatz einer auf pH 5,0 gestellten Mischung von 9,2 Teilen 2-Tauryläthanol in 50 ml Wasser wird der pH der Reaktionsmischung durch ständige Zugabe von 2n Natriumhydroxidlösung zuerst kurze Zeit schwach kongosauer und dann bei 5,0 gehalten. Dabei wird die Temperatur innert 2 bis 3 Stunden auf 20 bis 25 °C erhöht. Nach Erhöhen der Temperatur auf 30 bis 35 °C werden weitere 15,3 Teile 2-Tauryläthanol portionsweise zugesetzt und dabei der pH der Reaktionsmischung bei 8,0 gehalten. Nach vollständiger Reaktion wird dieses Farbstoffzwischenprodukt bei 0 bis 10 °C und pH 5,0 mit 15,2 Teilen diazotierter 2-Aminonaphthalin-1,5-disulfonsäure gekuppelt. Nach vollständiger Kupplungsreaktion bei pH 6,5 wird die Reaktionsmischung geklärt und der gebildete Farbstoff der Formel

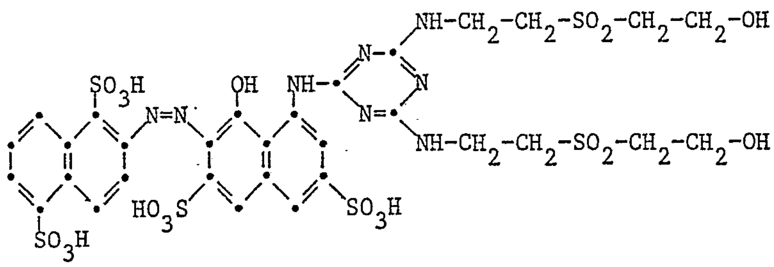

durch Einstreuen von Natriumchlorid ausgesalzen, filtriert und im Vakuum getrocknet. Die zwei Hydroxygruppen des so erhaltenen Farbstoffes werden gemäss den Angaben in Beispiel 1 sulfatiert. Dies ergibt einen Reaktivfarbstoff, der Baumwolle insbesondere als Kaltfärber in blaustichigen Rottönen färbt.

Weitere Reaktivfarbstoffe, die Baumwolle insbesondere als Kaltfärber in Rottönen färben, werden erhalten, wenn man gemäss den Angaben in Beispiel 3 auf die in Tabelle 2, Spalte 2, angegebene Kupplungskomponente, die zuerst mit 2,4,6-Trifluor-1,3,5-triazin und dann stufenweise mit 2 Aequivalent 2-Tauryläthanol umgesetzt wird, die in Spalte 3 angegebene diazotierte Diazokomponente kuppelt und die zwei Hydroxygruppen des so erhaltenen Farbstoffes sulfatiert.

Tabelle 2

| No. | Kupplungskomponente | Diazokomponente | Farbton auf Baumwolle |
|---|---|---|---|
| 1 | 1-Amino-8-hydroxynaphthalin-3,6-disulfonsäure | 1-Aminobenzol-2-sulfonsäure | rot |
| 2 | 1-Amino-8-hydroxynaphthalin-4,6-disulfonsäure | 1-Aminobenzol-2-sulfonsäure | do. |
| 3 | 1-Amino-8-hydroxynaphthalin-3,6-disulfonsäure | 1-Amino-4-carboxybenzol-2-sulfonsäure | do. |
| 4 | 1-Amino-8-hydroxynaphthalin-3,6-disulfonsäure | 1-Amino-4-methylbenzol-2-sulfonsäure | do. |
| 5 | 1-Amino-8-hydroxynaphthalin-3,6-disulfonsäure | 1-Aminobenzol-2,5-disulfonsäure | do- |
| 6 | 1-Amino-8-hydroxynaphthalin-3,6-disulfonsäure | 2-Aminonaphthalin-1-sulfonsäure | do- |
| 7 | 1-Amino-8-hydroxynaphthalin-4,6-disulfonsäure | 2-Aminonaphthalin-1,5-disulfonsäure | do- |
| 8 | 1-Amino-8-hydroxynaphthalin-6-sulfonsäure | 2-Aminonaphthalin-1,5,7-trisulfonsäure | do. |

Beispiel 4

27,6 g des Farbstoffes 6-Amino-1-hydroxy-2-(1',5'-disulfonaphthyl-2'-azo)-naphthalin-3-sulfonsäure werden in 600 ml Wasser gelöst. Zu der auf 0-5 °C abgekühlten Lösung lässt man in 15 Minuten 7,1 g 2,4,6-Trifluor-1,3,5-triazin zutropfen und hält den pH-Wert mit 20 %iger Natriumcarbonatlösung bei 5,5-6. Sobald die Kondensation beendet ist, d. h. wenn keine freie Aminogruppe mehr nachweisbar ist, gibt man 11 g β-(β-Chloräthyl-sulfonyl)-äthylaminhydrochlorid als Pulver zu und lässt die Temperatur langsam auf 20° ansteigen. Man rührt bei pH 6, bis die Alkaliaufnahme zum Stillstand gekommen und die Kondensation beendet ist. Zur Umsetzung des dritten Fluoratoms werden weitere 11 g β-(β-Chloräthyl-sulfonyl)-äthyl-aminhydrochlorid zugegeben und unter den gleichen pH-Bedingungen, aber bei 30-40°, bis zur Beendigung der Reaktion kondensiert. Der Farbstoff der Formel

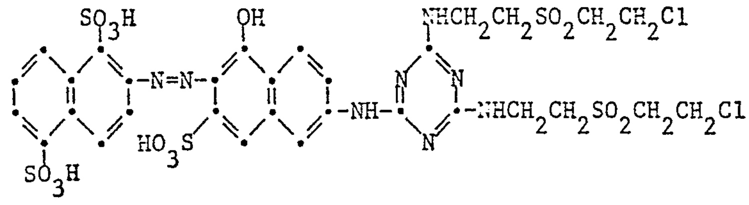

wird durch Zugabe von Natriumchlorid gefällt, filtriert, gewaschen und im Vakuum getrocknet. Er stellt ein oranges Pulver dar und färbt Baumwolle in klaren orangen Tönen.

Bei der Kondensation des dritten Fluoratoms mit dem Amin erfolgt bei längererer Reaktionsdauer bei 40° bereits partiell Elimination von Chlorwasserstoff, so dass im Farbstoff teilweise schon die Vinyl-Formen gebildet sind.

Weitere Reaktivfarbstoffe, die Baumwolle in den in Tabelle 3, Spalte 3, angegebenen Farbtönen färben, werden erhalten, wenn man die in Spalte 2 angegebenen aminogruppenhaltigen Chromophore gemäss den Angaben in Beispiel 4 zuerst mit 2,4,6-Trifluor-1,3,5-triazin und dann stufenweise mit 2 Aequivalent β-(β-Chloräthyl-sulfonyl)-äthylamin-hydrochlorid umsetzt.

(Siehe Tabelle 3 Seite 29 ff.)

Tabelle 3

| No. | Chromophor | Farbton auf Baumwolle |
|---|---|---|
| 1 | 2-Aminonaphthalin-3,6-8-trisulfonsäure ⟶ 1-Amino-3-methylbenzol | rotstichig gelb |
| 2 | 2-Aminonaphthalin-4,6,8-trisulfonsäure ⟶ 1-Amino-3-methylbenzol | do. |
| 3 | 2-Aminonaphthalin-4,6,8-trisulfonsäure ⟶ 1-Amino-3-acetylaminobenzol | do. |
| 4 | 2-Aminonaphthalin-3,6,8-trisulfonsäure ⟶ 3-Amino-phenylharnstoff | do. |
| 5 | 1-Amino-4-(2',5'-disulfophenylazo)-naphthalin-6-sulfonsäure ⟶ 1-Amino-3-methylbenzol | braun |
| 6 | 1-Amino-4-(2',5'-disulfophenylazo)-naphthalin-6-sulfonsäure ⟶ 1-Aminonaphthalin-6-sulfonsäure | do. |
| 7 | 1-Amino-4-(4'-sulfophenylazo)-benzol-2-sulfonsäure ⟶ 1-Aminonaphthalin-6-sulfonsäure | do. |
| 8 | 1-Amino-4-(4',6',8'-trisulfonaphthyl-2'-azo)-naphthalin-6-sulfonsäure ⟶ 1-Amino-3-methylbenzol | do. |
| 9 | 1-Amino-4-(2',5'-disulfophenylazo)-naphthalin-6-sulfonsäure ⟶ 1-Amino-2,5-dimethylbenzol | do. |
| 10 | 1-Amino-3-acetylaminobenzol-6-sulfonsäure ⟶ 1-Aethyl-3-sulfomethyl-4-methyl-6-hydroxy-pyridon-(2)-5-carbonsäureamid (verseift) | gelb |
| 11 | 1-Amino-3-acetylaminobenzol-6-sulfonsäure ⟶ 1-Aethyl-3-aminocarbonyl-4-methyl-6-hydroxy-pyridon-(2) (verseift) | do. |
| 12 | 1-Amino-3-acetylaminobenzol-6-sulfonsäure ⟶ 1-(2'-Methyl-4'-sulfophenyl)-3-carboxy-pyrazolon-(5) (verseift) | do. |
| 13 | 1-Amino-3-acetylaminobenzol-6-sulfonsäure ⟶ 1-(4',8'-Disulfonaphthyl-[2'])-3-methyl-pyrazolon-(5) (verseift) | do. |
| 14 | 2-Aminonaphthalin-3,6,8-trisulfonsäure ⟶ 2-Acetylamino-5-hydroxynaphthalin-7-sulfonsäure (verseift) | orange |

Tabelle 3 (Fortsetzung)

| No. | Chromophor | Farbton auf Baumwolle |
|---|---|---|
| 15 | 2-Aminonaphthalin-1,5,7-trisulfonsäure ⟶ 1-Acetylamino-5-hydroxynaphthalin-7-sulfonsäure (verseift) | orange |
| 16 | 1-Amino-4-methoxybenzol-2,5-disulfonsäure ⟶ 2-Amino-5-hydroxynaphthalin-7-sulfonsäure | scharlach |
| 17 | 1-Amino-4-methoxybenzol-2-sulfonsäure ⟶ 2-Amino-5-hydroxynaphthalin-7-sulfonsäure | do. |
| 18 | 1-Amino-4-methoxybenzol-2-sulfonsäure ⟶ 2-Methylamino-5-hydroxynaphthalin-7-sulfonsäure | do. |
| 19 | 1-Aminobenzol-2-sulfonsäure ⟶ 1-(4'-Nitrobenzoylamino)-8-hydroxynaphthalin-3,6-disulfonsäure (reduziert) | blaustichig rot |
| 20 | 1-Amino-3-acetylaminobenzol-6-sulfonsäure ⟶ 1-Benzoylamino-8-hydroxynaphthalin-3,6-disulfonsäure (verseift) | do. |
| 21 | 1-Amino-3-acetylaminobenzol-6-sulfonsäure ⟶ 1-Acetylamino-8-hydroxynaphthalin-3,6-disulfonsäure (verseift) | do. |
| 22 | 1-Amino-3-acetylaminobenzol-6-sulfonsäure ⟶ 1-Benzoylamino-8-hydroxynaphthalin-4,6-disulfonsäure (verseift) | do. |
| 23 | 1-Amino-3-acetylaminobenzol-6-sulfonsäure ⟶ 1-Acetylamino-8-hydroxynaphthalin-4,6-disulfonsäure (verseift) | gelbstichig rot |
| 24 | 1-Amino-4-acetylaminobenzol-2-sulfonsäure ⟶ saure 2-Amino-8-hydroxynaphthalin-3,6-disulfonsäure (verseift) | blaustichig rot |
| 25 | 1-Amino-4-acetylaminobenzol-2-sulfonsäure ⟶ saure 2-Amino-8-hydroxynaphthalin-6-sulfonsäure (verseift) | do. |
| 26 | 2-Aminonaphthalin-1,5-disulfonsäure ⟶ 1-Amino-8-hydroxynaphthalin-3,6-disulfonsäure | do. |
| 27 | 3-Methoxy-4-amino-6-methylazobenzol-2',5'-disulfonsäure ⟶ 2-Methylamino-5-hydroxynaphthalin-7-sulfonsäure (entmethylierend gekupfert) | marineblau |

Tabelle 3 (Fortsetzung)

| No. | Chromophor | Farbton auf Baumwolle |
|---|---|---|
| 28 | 3-Methoxy-4-amino-6-methylazobenzol-2',4'-disulfonsäure ⟶ 2-Amino-5-hydroxynaphthalin-1,7-disulfonsäure (entmethylierend gekupfert) | marineblau |
| 29 | 1-Amino-3-acetylaminobenzol-6-sulfonsäure ⟶ 1-Amino-8-hydroxy-2-(4'-sulfophenylazo)-naphthalin-3,6-disulfonsäure (verseift) | blau |
| 30 | N-(2-Carboxy-4-sulfophenyl)-N'-(2'-hydroxy-3'-amino-5'-sulfophenyl)-ms-phenylformazan (Cu-Complex) | do. |
| 31 | N-(2-Carboxy-5-sulfophenyl)-N'-(2'-hydroxy-3'-amino-5'-sulfophenyl)-ms-phenylformazan (Cu-Komplex) | do. |

Tabelle 3 (Fortsetzung)

| No. | Chromophor | Farbton auf Baumwolle |
|---|---|---|
| 32 | 0,5 Aequivalent 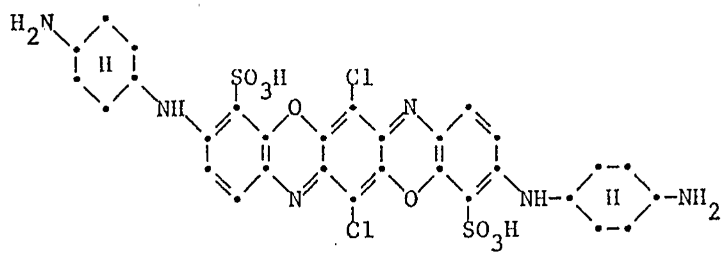 | marineblau |
| 33 | 0,5 Aequivalent 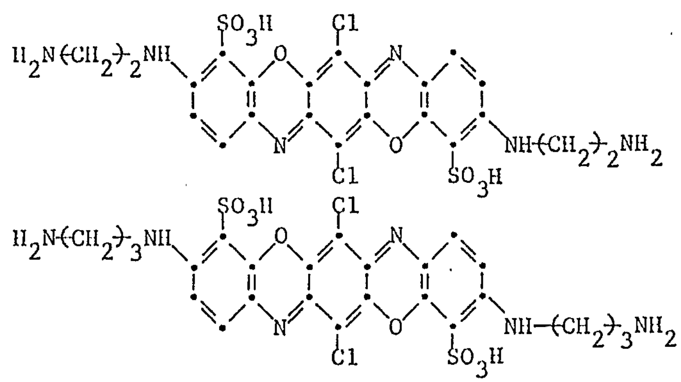 | do. |
| 34 | 0,5 Aequivalent | do. |
| 35 | 0,5 Aequivalent 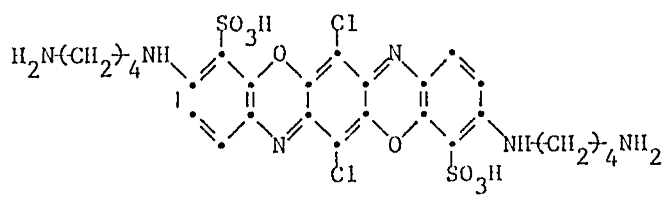 | do |

Färbevorschrift I

2 Teile des gemäss Beispiel 1 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75 % seines Gewichtes zunimmt, und dann getrocknet.

Danach imprägniert man das Gewebe mit einer 20 °C warmen Lösung, die pro Liter 4 Gramm Natriumhydroxid und 300 Gramm Natriumchlorid enthält, quetscht auf 75 % Gewichtszunahme ab, dämpft die Färbung während 30 Sekunden bei 100 bis 102 °C, spült, seift während einer Viertelstunde in einer 0,3 %igen kochenden Lösung eines nichtionogenen Waschmittels, spült und trocknet.

Färbevorschrift II

2 Teile des gemäss Beispiel 1 erhaltenen Farbstoffes werden in 400 Teilen Wasser gelöst, dazu gibt man 1 500 Teile einer Lösung, die pro Liter 53 g Natriumchlorid enthält. In dieses Färbebad geht man bei 40 °C mit 100 Teilen eines Baumwollgewebes ein. Nach 45 Minuten werden 100 Teile einer Lösung, die pro Liter 16 g Natriumhydroxid und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Färbevorschrift III

4 Teile des gemäss Beispiel 1 erhaltenen Farbstoffes werden in 50 Teilen Wasser gelöst. Dazu gibt man 50 Teile einer Lösung, die pro Liter 5 g Natriumhydroxid und 20 g kalziniertes Soda enthält. Mit der erhaltenen Lösung wird ein Baumwollgewebe foulardiert, so dass es um 70 % seines Gewichtes zunimmt, und dann auf eine Kaule aufgewickelt. Das Baumwollgewebe wird so während 3 Stunden bei Raumtemperatur gelagert. Danach wird die gefärbte Ware gespült, während einer Viertelstunde mit einem nichtionogenen Waschmittel kochend geseift, nochmals gespült und getrocknet.

Färbevorschrift IV

2 Teile des gemäss Beispiel 1 erhaltenen Farbstoffes werden in 400 Teilen Wasser gelöst ; dazu gibt man 1 500 Teile einer Lösung, die pro Liter 53 g Natriumchlorid enthält. In dieses Färbebad geht man bei 35 °C mit 100 Teilen eines Baumwollgewebes ein. Nach 20 Minuten werden 100 Teile einer Lösung, die pro Liter 16 g Natriumhydroxid und 20 g kalziniertes Soda enthält, zugegeben. Die Temperatur des Färbebades wird weitere 15 Minuten bei 35 °C gehalten. Danach wird die Temperatur innerhalb 20 Minuten auf 60 °C erhöht. Die Temperatur wird weitere 35 Minuten bei 60 °C gehalten. Danach wird gespült, während einer Viertelstunde mit einem nichtionogenen Waschmittel kochend geseift, nochmals gespült und getrocknet.

Druckvorschrift

3 Teile des gemäss Beispiel 1 erhaltenen Farbstoffes werden unter schnellem Rühren in 100 Teile einer Stammverdickung, enthaltend 50 Teile 5 %ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

**Patentansprüche**

1. Reaktivfarbstoffe der Formel

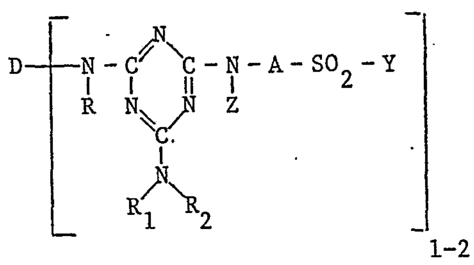

(1),

worin D der Rest eines sulfogruppenhaltigen organischen Farbstoffes der Mono- oder Polyazo-,

Metallkomplexazo-, Anthrachinon-, Phthalocyanin-, Formazan-, Azomethin, Dioxazin-, Phenazin-, Stilben-, Triphenyl- methan-, Xanthen-, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, A gegebenenfalls substituiertes $C_{2-6}$-Alkylen oder Cyclohexylen, Y ein Rest $—CH{=}CH_2$ oder $—CH_2—CH_2—X$, X Sulfato, Thiosulfato, Acetato, Phosphato oder Chlor, Z Wasserstoff oder der Rest eines gegebenenfalls substituierten Kohlenwasserstoffs, $R_1$ Wasserstoff oder gegebenenfalls substituiertes Alkyl, und $R_2$ ein Rest der Formel

$$—A'—SO_2—Y' \qquad (3),$$

worin A' und Y' die gleichen Bedeutungen haben wie A und Y in Formel (1), unabhängig von diesen.

2. Reaktivfarbstoffe gemäss Anspruch 1, worin D, R, A, Y, $R_1$ und $R_2$ die in Anspruch 1 angegebenen Bedeutungen haben, und Z Wasserstoff oder ein Rest der Formel

$$—A—SO_2—Y \qquad (2)$$

ist.

3. Reaktivfarbstoffe gemäss Anspruch 1, worin D, R, A, Y, Z und $R_2$ die in Anspruch 1 angagebenen Bedeutungen haben, und $R_1$ ein Rest der Formel

$$—A'—SO_2—Y' \qquad (3)$$

ist, worin A' und Y' die in Anspruch 1 angegebenen Bedeutungen haben, wobei A' und Y' unabhängig von A und Y ist.

4. Reaktivfarbstoffe gemäss Anspruch 3, worin A' = A und Y' = Y ist.

5. Reaktivfarbstoffe gemäss Anspruch 4, worin A ein Rest $—CH_2CH_2—$, Y ein Rest $—CH_2CH_2—Cl$, Z Wasserstoff, $R_1$ Wasserstoff und $R_2$ ein Rest $—CH_2CH_2—SO_2—CH_2CH_2—Cl$ ist.

6. Reaktivfarbstoffe gemäss Anspruch 4, worin A ein Rest $—CH_2CH_2—$, Y ein Rest $—CH_2CH_2—OSO_3H$, Z Wasserstoff, $R_1$ Wasserstoff und $R_2$ ein Rest $—CH_2CH_2—SO_2—CH_2CH_2—OSO_3H$ ist.

7. Reaktivfarbstoffe gemäss Anspruch 1, worin D die in Anspruch 1 angegebene Bedeutung hat, R Wasserstoff oder $C_{1-4}$-Alkyl, A $C_{2-6}$-Alkylen, Y ein Rest $—CH{=}CH_2$ oder $—CH_2—CH_2—X$, worin X Cl oder $OSO_3H$ ist, Z Wasserstoff, $C_{1-4}$-Alkyl oder ein Rest der Formel (2), worin A und Y die oben angegebenen Bedeutungen haben, $R_1$ Wasserstoff, $C_{1-4}$-Alkyl, oder ein Rest der Formel (3), und $R_2$ ein Rest der Formel (3), worin A' und Y' die oben angegebenen Bedeutungen haben, ist.

8. Reaktivfarbstoffe gemäss Anspruch 1, worin D der Rest eines Mono- oder Disazofarbstoffes ist.

9. Reaktivfarbstoffe gemäss Anspruch 1, worin D der Rest eines Metallkomplexazo- oder Formazanfarbstoffes ist.

10. Reaktivfarbstoffe gemäss Anspruch 1, worin D der Rest eines Anthrachinonfarbstoffes ist.

11. Reaktivfarbstoffe gemäss Anspruch 9, worin D der Rest eines Metallkomplexazofarbstoffes der Benzol- oder Naphthalinreihe ist.

12. Reaktivfarbstoffe gemäss Anspruch 11, worin D der Rest eines 1 : 1-Kupferkomplexazofarbstoffes der Benzol- oder Naphthalinreihe ist, und das Kupferatom an jeweils eine metallisierbare Gruppe in ortho-Position zur Azobindung gebunden ist.

13. Reaktivfarbstoffe gemäss Anspruch 8, der Formel

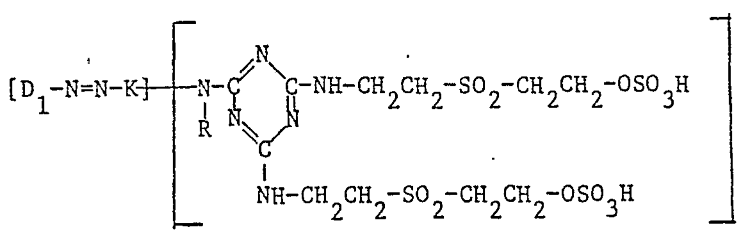 1-2 (4)

worin $D_1$ der Rest einer Diazokomponente der Benzol- oder Naphthalinreihe, K der Rest einer Kupplungskomponente der Benzol- oder Naphthalinreihe oder der heterocyclischen Reihe, und R Wasserstoff oder gegebenenfalls substituiertes $C_{1-4}$-Alkyl ist, und der Reaktivrest an die Diazokomponente oder an die Kupplungskomponente gebunden ist, oder je ein Reaktivrest sowohl an die Diazokomponente als auch an die Kupplungskomponente gebunden ist.

14. Reaktivfarbstoffe gemäss Anspruch 13, worin R Wasserstoff oder Methyl ist.

15. Verfahren zur Herstellung von Reaktivfarbstoffen gemäss Anspruch 1, dadurch gekennzeichnet, dass man einen sulfogruppenhaltigen organischen Farbstoff der Formel

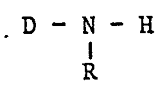 (5)

oder ein Farbstoffvorprodukt, mindestens ein Aequivalent 2,4,6-Trifluor-s-triazin, und mindestens ein Aequivalent je eines Amins der Formel

$$\underset{\substack{|\\ Z}}{HN} - A - SO_2 - Y \qquad (6)$$

und der Formel

$$\underset{\substack{|\\ R_1}}{HN} - R_2 \qquad (7)$$

kondensiert, wobei D, R, A, Y, Z, $R_1$ und $R_2$ in den oben genannten Formeln und Resten die in Anspruch 1 angegebenen Bedeutungen haben, und dass man im Falle der Verwendung von Farbstoffvorprodukten, diese in die gewünschten Endfarbstoffe umwandelt.

16. Abänderung des Verfahrens gemäss Anspruch 15, dadurch gekennzeichnet, dass man von Vorprodukten von Aminen der Formel(n) (6) und/oder (7) ausgeht, und diese nach der Kondensation mit dem 2,4,6-Trifluor-s-triazin einer Umwandlungsreaktion, insbesondere einer Acylierungs- oder Sulfatierungsreaktion, unterzieht, so dass ein Reaktivfarbstoff gemäss Anspruch 1 erhalten wird.

17. Verfahren gemäss Anspruch 16, dadurch gekennzeichnet, dass man einen organischen Farbstoff der Formel (5) mit 2,4,6-Trifluor-s-triazin kondensiert, das Kondensationsprodukt mit zwei Aequivalenten eines Amins der Formel

$$\underset{\substack{|\\ Z}}{HN}-A-SO_2-CH_2CH_2-OH \qquad (8)$$

kondensiert, und das tertiäre Kondensationsprodukt mit Schwefelsäure umsetzt.

18. Verfahren gemäss Anspruch 16, dadurch gekennzeichnet, dass man 2,4,6-Trifluor-s-triazin mit einem Amin der Formel (8) kondensiert, das primäre Kondensationsprodukt mit einem organischen Farbstoff der Formel (5) kondensiert, anschliessend nochmals mit einem Amin der Formel (8) kondensiert und das tertiäre Kondensationsprodukt mit Schwefelsäure behandelt.

19. Verfahren gemäss Anspruch 16, dadurch gekennzeichnet, dass man 2,4,6-Trifluor-s-triazin mit zwei Aequivalenten eines Amins der Formel (8) kondensiert, das sekundäre Kondensationsprodukt mit einem organischen Farbstoff der Formel (5) kondensiert, und das tertiäre Kondensationsprodukt mit Schwefelsäure behandelt.

20. Verfahren gemäss einem der Ansprüche 16 bis 19, dadurch gekennzeichnet, dass man konzentrierte Schwefelsäure verwendet und bei 0° bis mässig erhöhter Temperatur umsetzt.

21. Verfahren gemäss Anspruch 15, dadurch gekennzeichnet, dass man einen organischen Farbstoff der Formel (5) mit 2,4,6-Trifluor-s-triazin kondensiert, und das Kondensationsprodukt mit zwei Aequivalenten eines Amins der Formel (6), worin Y

$$-CH_2CH_2-Cl$$

oder

$$-CH_2CH_2-OSO_3H$$

ist, kondensiert.

22. Verfahren gemäss einem der Ansprüche 15 und 21, dadurch gekennzeichnet, dass man als Amin der Formel (6) die Verbindung der Formel

$$H_2N-CH_2CH_2-SO_2-CH_2CH_2-Cl \qquad (9)$$

verwendet.

23. Verfahren gemäss einem der Ansprüche 15 und 21, dadurch gekennzeichnet, dass man als Amin der Formel (6) die Verbindung der Formel

$$H_2N-CH_2CH_2-SO_2-CH_2-CH_2-OSO_3H \qquad (10)$$

verwendet.

24. Verwendung der Reaktivfarbstoffe gemäss den Ansprüchen 1 bis 14 bzw. der gemäss den Ansprüchen 15 bis 23 erhältlichen Reaktivfarbstoffe zum Färben und Bedrucken.

25. Verwendung gemäss Anspruch 24 zum Färben von Cellulosefasern.

**Claims**

1. A reactive dye of the formula

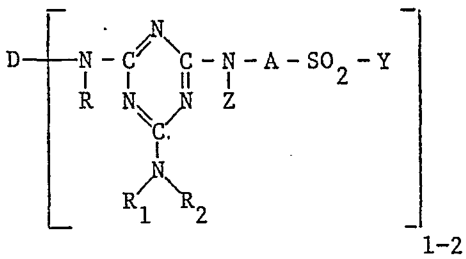

(1)

in which D is the radical of a sulfo-containing organic dye of the monoazo, polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylene tetracarbimide series, R is hydrogen or unsubstituted or substituted $C_1$-$C_4$ alkyl, A is unsubstituted or substituted $C_2$-$C_6$ alkylene or cyclohexylene, Y is a $—CH{=}CH_2$ or $—CH_2—CH_2—X$ radical, X is sulfato, thiosulfato, acetato, phosphato or chlorine, Z is hydrogen or the radical of an unsubstituted or substituted hydrocarbon, $R_1$ is hydrogen or unsubstituted or substituted alkyl, and $R_2$ is a radical of the formula

$$—A'—SO_2—Y' \qquad (3)$$

wherein A' and Y' have the same meanings as A and Y in formula (1), independently thereof.

2. A reactive dye according to claim 1, in which D, R, A, Y, $R_1$ and $R_2$ are as defined in claim 1 and Z is hydrogen or a radical of the formula

$$—A—SO_2—Y \qquad (2)$$

3. A reactive dye according to claim 1, in which D, R, A, Y, Z and $R_2$ are as defined in claim 1, and $R_1$ is a radical of the formula

$$—A'—SO_2—Y' \qquad (3)$$

in which A' and Y' are as defined in claim 1, with A' and Y' being independent of A and Y.

4. A reactive dye according to claim 3, in which A' = A and Y' = Y.

5. A reactive dye according to claim 4, in which A is a $—CH_2CH_2—$ radical, Y is a $—CH_2CH_2—Cl$ radical, Z is hydrogen, $R_1$ is hydrogen and $R_2$ is a $—CH_2CH_2—SO_2—CH_2CH_2—Cl$ radical.

6. A reactive dye according to claim 4, in which A is a $—CH_2CH_2—$ radical, Y is a $—CH_2CH_2—OSO_3H$ radical, Z is hydrogen, $R_1$ is hydrogen and $R_2$ is a $—CH_2CH_2—SO_2—CH_2CH_2—OSO_3H$ radical.

7. A reactive dye according to claim 1, in which D is a defined in claim 1, R is hydrogen or $C_{1\text{-}4}$ alkyl, A is $C_{2\text{-}6}$ alkylene, Y is a $—CH{=}CH_2$ or $—CH_2—CH_2—X$ radical, in which X is Cl or $OSO_3H$, Z is hydrogen, $C_{1\text{-}4}$ alkyl or a radical of the formula (2), in which A and Y are as defined above, $R_1$ is hydrogen, $C_{1\text{-}4}$alkyl or a radical of the formula (3), and $R_2$ is a radical of the formula (3), in which A' and Y' are as defined above.

8. A reactive dye according to claim 1, in which D is the radical of a monoazo or disazo dye.

9. A reactive dye according to claim 1, in which D is the radical of a metal complex azo or formazan dye.

10. A reactive dye according to claim 1, in which D is the radical of an anthraquinone dye.

11. A reactive dye according to claim 9, in which D is the radical of a metal complex azo dye of the benzene or naphthalene series.

12. A reactive dye according to claim 11, in which D is the radical of a 1 : 1 copper complex azo dye of the benzene or naphthalene series and the copper atom is in each case bonded to a metallisable group in ortho-position relative to the azo bond.

13. A reactive dye according to claim 8, of the formula

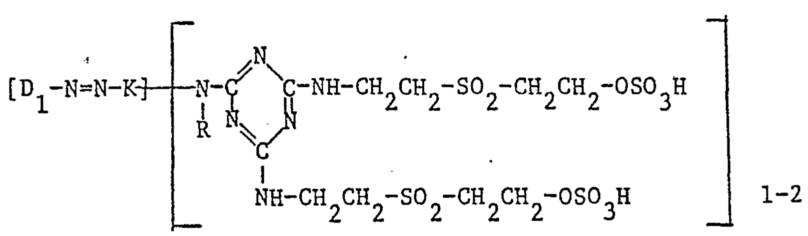

(4)

in which $D_1$ is the radical of a diazo component of the benzene or naphthalene series, K is the radical of a coupling component of the benzene or naphthalene series or the heterocyclic series, R is hydrogen or unsubstituted or substituted $C_{1-4}$alkyl, and the reactive radical is bonded to the diazo component or to the coupling component, or one reactive radical each is bonded not only to the diazo component but also to the coupling component.

14. A reactive dye according to claim 13, in which R is hydrogen or methyl.

15. A process for the preparation of a reactive dye according to claim 1, which comprises condensing a sulfo-containing organic dye of the formula

$$D-\underset{\substack{|\\ R}}{N}-H \qquad (5)$$

or a dye precursor with at least one equivalent of 2,4,6-trifluoro-s-triazine, and at least one equivalent each of an amine of the formula

$$\underset{\substack{|\\ Z}}{HN}-A-SO_2-Y \qquad (6)$$

and of the formula

$$\underset{\substack{|\\ R_1}}{HN}-R_2 \qquad (7)$$

in which formulae and radicals above D, R, A, Y, Z, $R_1$ and $R_2$ are as defined in claim 1 and if a dye precursor has been used, converting the latter into the final dye desired.

16. A modification of the process according to claim 15, wherein precursors of amines of the formula or the formulae (6) and/or (7) are used as starting materials and are subjected, after the condensation with 2,4,6-trifluoro-s-triazine, to a conversion reaction, in particular an acylation or sulfation reaction, so that a reactive dye according to claim 1 is obtained.

17. A process according to claim 16, which comprises condensing an organic dye of the formula (5) with 2,4,6-trifluoro-s-triazine, condensing the condensation product with two equivalents of an amine of the formula

$$\underset{\substack{|\\ Z}}{HN}-A-SO_2-CH_2CH_2-OH \qquad (8),$$

and reacting the tertiary condensation product with sulfuric acid.

18. A process according to claim 16, which comprises condensing 2,4,6-trifluoro-s-triazine with an amine of the formula (8), condensing the primary condensation product with an organic dye of the formula (5), then condensing once more with an amine of the formula (8), and treating the tertiary condensation product with sulfuric acid.

19. A process according to claim 16, which comprises condensing 2,4,6-trifluoro-s-triazine with two equivalents of an amine of the formula (8), condensing the secondary condensation product with an organic dye of the formula (5), and treating the tertiary condensation product with sulfuric acid.

20. A process according to any one of claims 16 to 19, which comprises using concentrated sulfuric acid and reacting at 0° to a moderately elevated temperature.

21. A process according to claim 15, which comprises condensing an organic dye of the formula (5) with 2,4,6-trifluoro-s-triazine and condensing the condensation product with two equivalents of an amine of the formula (6) in which Y is $-CH_2CH_2-Cl$ or $-CH_2CH_2-OSO_3H$.

22. A process according to either of claims 15 or 21, which comprises using the compound of the formula

$$H_2N-CH_2CH_2-SO_2-CH_2CH_2-Cl \qquad (9)$$

as an amine of the formula (6).

23. A process according to either of claims 15 or 21, which comprises using the compound of the formula

$$H_2N-CH_2CH_2-SO_2-CH_2-CH_2-OSO_3H \qquad (10)$$

as an amine of the formula (6).

24. Use of a reactive dye according to any one of claims 1 to 14 or of a reactive dye obtainable according to any one of claims 15 to 23 for dyeing and printing.

25. Use according to claim 24 for dyeing cellulose fibres.

**Revendications**

1. Colorant réactif de formule

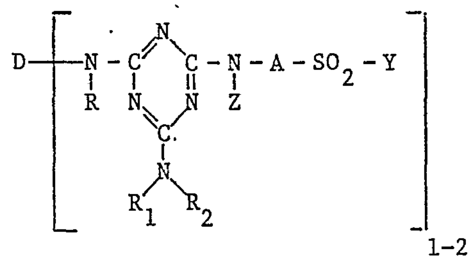 (1),

dans lequel D est le résidu d'un colorant organique contenant des groupes sulfo de la série monoazoïque, polyazoïque, azoïque à complexe métallique, anthraquinone, phtalocyanine, formazan, azométhine, dioxazine, phénazine, stilbène, triphénylméthane, xanthène, thioxanthone, nitroaryle, naphtoquinone, pyrènequinone, ou pérylènetétracarbimide, R est l'hydrogène ou un groupe alkyle en $C_{1-4}$ éventuellement substitué, A est un groupe alkylène en $C_{2-6}$ ou cyclohexylène, éventuellement substitué, Y est un radical $—CH=CH_2$ ou $—CH_2—CH_2—X$, X est un groupe sulfato, thiosulfato, acétato, phosphato ou chlorure, Z est l'hydrogène ou le résidu d'un hydrocarbure éventuellement substitué, $R_1$ est l'hydrogène ou un groupe alkyle éventuellement substitué, et $R_2$ un radical de formule

$$—A'—SO_2—Y' \qquad (3),$$

dans laquelle A' et Y' ont les mêmes significations que A et Y dans la formule (1), indépendamment de ceux-ci.

2. Colorant réactif selon la revendication 1, où D, R, A, Y, $R_1$ et $R_2$ ont les significations indiquées dans la revendication 1, et Z est l'hydrogène ou un radical de formule

$$—A—SO_2—Y \qquad (2).$$

3. Colorant réactif selon la revendication 1, où D, R, A, Y, Z et $R_2$ ont les significations indiquées dans la revendication 1, et $R_1$ est un résidu de formule

$$—A'—SO_2—Y' \qquad (3)$$

dans laquelle A' et Y' ont les significations données dans la revendication 1, A' et Y' étant indépendants de A et de Y.

4. Colorant réactif selon la revendication 3, où A' = A et Y' = Y.

5. Colorant réactif selon la revendication 4, où A est un radical $—CH_2CH_2—$, Y un radical $—CH_2CH_2—Cl$, Z un hydrogène, $R_1$ un hydrogène et $R_2$ un résidu $—CH_2CH_2—SO_2—CH_2CH_2—Cl$.

6. Colorant réactif selon la revendication 4, où A est un radical $—CH_2CH_2—$, Y un radical $—CH_2CH_2—OSO_3H$, Z un hydrogène, $R_1$ un hydrogène, et $R_2$ un radical $—CH_2CH_2—SO_2—CH_2CH_2—OSO_3H$.

7. Colorant réactif selon la revendication 1, où D a la signification donnée dans la revendication 1, R est un hydrogène ou un groupe alkyle en $C_{1-4}$, A est un radical alkylène en $C_{2-6}$, Y est un radical $—CH=CH_2$ ou $—CH_2—CH_2—X$, X étant un chlore ou un groupe $OSO_3H$, Z est un hydrogène, un groupe alkyle en $C_{1-4}$, ou un radical de formule (2), A et Y ayant les significations données ci-dessus, $R_1$ est un hydrogène, un groupe alkyle en $C_{1-4}$, ou un radical de formule (3), et $R_2$ est un radical de formule (3), A' et Y' ayant les significations données ci-dessus.

8. Colorant réactif selon la revendication 1, où D est le résidu d'un colorant monoazoïque ou disazoïque.

9. Colorant réactif selon la revendication 1, où D est le résidu d'un colorant au formazan d'un colorant azoïque à complexe métallique.

10. Colorant réactif selon la revendication 1, où D est le résidu d'un colorant anthraquinone.

11. Colorant réactif selon la revendication 9, où D est le résidu d'un colorant azoïque à complexe métallique de la série du benzène ou de celle du naphtalène.

12. Colorant réactif selon la revendication 11, où D est le résidu d'un colorant azoïque à complexe du cuivre 1 : 1 de la série du benzène ou de celle du naphtalène, et où l'atome de cuivre est lié à un groupe métallisable placé en position ortho par rapport à la liaison azo.

13. Colorant réactif selon la revendication 8, de formule

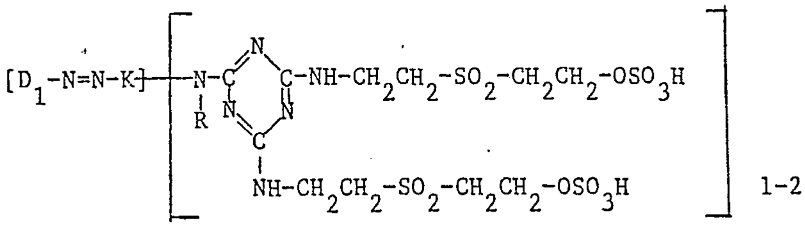

(4)

où $D_1$ est le résidu d'un composant diazoïque de la série du benzène ou de celle du naphtalène, K est le résidu d'un composant de copulation de la série du benzène ou de celle du naphtalène ou de la série hétérocyclique, et R est un hydrogène ou un groupe alkyle en $C_{1-4}$ éventuellement substitué, le résidu réactif étant lié au composant diazoïque ou au composant de copulation, ou bien le composant diazoïque et le composant de copulation comportant chacun un résidu réactif.

14. Colorant réactif selon la revendication 13, où R est un hydrogène ou un groupe méthyle.

15. Procédé de préparation de colorants réactifs selon la revendication 1, caractérisé en ce que l'on condense un colorant organique contenant des groupes sulfo de formule

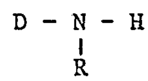

(5)

ou un précurseur du colorant, au moins un équivalent de 2,4,6-trifluoro-s-triazine, et au moins un équivalent d'une amine de formule

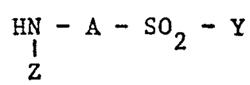

(6)

et d'une amine de formule

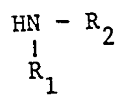

(7)

où D, R, A, Y, Z, $R_1$ et $R_2$, dans les formules et les résidus mentionnés ci-dessus, ont les significations indiquées dans la revendication 1, et en ce que, dans le cas où l'on emploie un précurseur du colorant, on transforme celui-ci en le colorant final désiré.

16. Modification du procédé selon la revendication 15, caractérisée en ce que l'on part de précurseurs des amines de formule (6) et/ou (7), et qu'on les soumet, après condensation avec la 2,4,6-trifluoro-s-triazine, à une réaction de transformation, en particulier en réaction d'acylation ou de sulfatation, de façon à obtenir un colorant réactif selon la revendication 1.

17. Procédé selon la revendication 16, caractérisé en ce que l'on condense un colorant organique de formule (5) avec la 2,4,6-trifluoro-s-triazine, on condense le produit de condensation avec deux équivalents d'une amine de formule

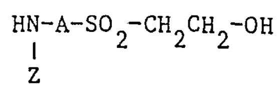

(8)

et on fait réagir le produit de condensation tertiaire avec l'acide sulfurique.

18. Procédé selon la revendication 16, caractérisé en ce que l'on condense la 2,4,6-trifluoro-s-triazine avec une amine de formule (8), on condense le produit de condensation primaire avec un colorant organique de formule (5), on condense ensuite à nouveau avec une amine de formule (8), et l'on traite le produit de condensation tertiaire avec l'acide sulfurique.

19. Procédé selon la revendication 16, caractérisé en ce que l'on condense la 2,4,6-trifluoro-s-triazine avec deux équivalents d'une amine de formule (8), on condense le produit de condensation secondaire avec un colorant organique de formule (5), et que l'on traite le produit de condensation tertiaire avec l'acide sulfurique.

20. Procédé selon l'une des revendications 16 à 19, caractérisé en ce que l'on utilise de l'acide sulfurique concentré et que l'on opère les réactions à une température comprise entre 0° et une température modérément élevée.

21. Procédé selon la revendicatien 15, caractérisé en ce que l'on condense un colorant organique de formule (5) avec la 2,4,6-trifluoro-s-triazine, et que l'on condense le produit de condensation avec deux équivalents d'une amine de formule (6), dans laquelle Y est

$-CH_2CH_2-Cl$

ou

$-CH_2CH_2-OSO_3H$

22. Procédé selon l'une des revendications 15 et 21, caractérisé en ce que l'on utilise, comme amine de formule (6), le composé de formule

$$H_2N-CH_2CH_2-SO_2-CH_2CH_2-Cl \quad (9)$$

23. Procédé selon l'une des revendications 15 et 21, caractérisé en ce que l'on utilise, en tant qu'amine de formule (6), le composé de formule

$$H_2N-CH_2CH_2-SO_2-CH_2-CH_2-OSO_3H \quad (10)$$

24. Utilisation des colorants réactifs selon les revendications 1 à 14, ou des colorants réactifs préparables selon les revendications 15 à 23, pour la teinture et l'impression.

25. Procédé selon la revendication 24 pour la teinture de fibres cellulosiques.